# EUROPEAN PATENT APPLICATION

(11) **EP 4 425 684 A1**
(43) Date of publication of application: **04.09.2024**
(21) Application number: 22886402.1
(22) Date of filing: 21.07.2022
(51) Int. Cl.: H01M 50/531, H01M 4/13, H01M 4/139, H01M 10/04, H01M 10/052, H01M 10/054, H01M 10/0562, H01M 10/058, H01M 50/117, H01M 50/121, H01M 50/124, H01M 50/548, H01M 50/586, H01M 50/591

(54) **BATTERY AND METHOD FOR MANUFACTURING BATTERY**

(30) Priority: 26.10.2021 JP 2021174375
(71) Applicant: Panasonic Intellectual Property Management Co., Ltd., Osaka-shi, Osaka 540-6207 (JP)
(72) Inventor: HONDA, Kazuyoshi, Kadoma-shi, Osaka 571-0057 (JP); KAWASE, Akira, Kadoma-shi, Osaka 571-0057 (JP); MORIOKA, Kazuhiro, Kadoma-shi, Osaka 571-0057 (JP); HIRANO, Koichi, Kadoma-shi, Osaka 571-0057 (JP); KOSHIZUKA, Tsutomu, Kadoma-shi, Osaka 571-0057 (JP); KOGA, Eiichi, Kadoma-shi, Osaka 571-0057 (JP)
(74) Representative: Grünecker Patent- und Rechtsanwälte PartG mbB
(86) International application number: PCT/JP2022/028286
(87) International publication number: WO 2023/074066

(57) **Abstract**

A battery according to the present disclosure includes a power-generating element having a plurality of parallel laminates that are electrically series-connected and laminated. The plurality of parallel laminates each include an odd number of battery cells that are electrically connected in parallel and laminated. The odd number of battery cells each include an electrode layer, a counter electrode layer, and a solid electrolyte layer positioned between the electrode layer and the counter electrode layer. The battery further includes: an electrode insulating member that covers the electrode layer on a first side surface of each of the plurality of parallel laminates; a counter electrode connector that covers the first side surface and the electrode insulating member and is electrically connected to the counter electrode layer in each of the plurality of parallel laminates; a counter electrode insulating member that covers the counter electrode layer on a second side surface of each of the plurality of parallel laminates; and an electrode connector that covers the second side surface and the counter electrode insulating member and is electrically connected to the electrode layer in each of the plurality of parallel laminates.

## Description

### Technical Field

The present disclosure relates to a battery and a method for manufacturing a battery.

### Background Art

There have heretofore been known batteries in which a plurality of series-connected battery cells are connected in parallel (see, for example, PTL 1 and 2).

### Citation List

### Patent Literature

PTL 1: Japanese Unexamined Patent Application Publication No. 2013-120717
PTL 2: Japanese Unexamined Patent Application Publication No. 2008-198492

### Summary of Invention

### Technical Problem

Further improvement is required in battery characteristics of batteries according to the related art.

Therefore, the present disclosure provides a high-performance battery and a method for manufacturing the same.

### Solution to Problem

A battery according to one aspect of the present disclosure is a battery including a power-generating element having a plurality of parallel laminates that are electrically series-connected and laminated. The plurality of parallel laminates each include an odd number of battery cells that are electrically connected in parallel and laminated. The odd number of battery cells each include an electrode layer, a counter electrode layer, and a solid electrolyte layer positioned between the electrode layer and the counter electrode layer. The battery further includes: an electrode insulating member that covers the electrode layer on a first side surface of each of the plurality of parallel laminates; a counter electrode connector that covers the first side surface and the electrode insulating member and is electrically connected to the counter electrode layer in each of the plurality of parallel laminates; a counter electrode insulating member that covers the counter electrode layer on a second side surface of each of the plurality of parallel laminates; and an electrode connector that covers the second side surface and the counter electrode insulating member and is electrically connected to the electrode layer in each of the plurality of parallel laminates.

A method for manufacturing a battery according to one aspect of the present disclosure includes the steps of: preparing a plurality of battery cells, each including an electrode layer, a counter electrode layer, and a solid electrolyte layer positioned between the electrode layer and the counter electrode layer; forming a laminate structure by laminating a plurality of battery cells, in which a plurality of parallel laminates are laminated, each having an odd number of battery cells laminated such that the arrangement order of the electrode layer, the counter electrode layer, and the solid electrolyte layer is alternated for every battery cell; covering the electrode layer with an electrode insulating member on a first side surface of each of the plurality of parallel laminates, and covering the counter electrode layer with a counter electrode insulating member on a second side surface of each of the plurality of parallel laminates; and covering the first side surface and the electrode insulating member with a counter electrode connector electrically connected to a plurality of the counter electrode layers, and covering the second side surface and the counter electrode insulating member with an electrode connector electrically connected to a plurality of the electrode layers, in each of the plurality of parallel laminates. Advantageous Effects of Invention

The present disclosure can provide a high-performance battery and a method for manufacturing the same.

### Brief Description of Drawings

[Fig. 1] Fig. 1 is a sectional view of a battery according to Embodiment 1.
[Fig. 2] Fig. 2 is a top view of the battery according to Embodiment 1.
[Fig. 3A] Fig. 3A is a sectional view of an example of a battery cell included in a power-generating element according to Embodiment 1.
[Fig. 3B] Fig. 3B is a sectional view of another example of a battery cell included in the power-generating element according to Embodiment 1.
[Fig. 3C] Fig. 3C is a sectional view of another example of a battery cell included in the power-generating element according to Embodiment 1.
[Fig. 4] Fig. 4 is a sectional view of the power-generating element according to Embodiment 1.
[Fig. 5] Fig. 5 is a sectional view of a battery according to Embodiment 2.
[Fig. 6] Fig. 6 is a sectional view of a battery according to Embodiment 3.
[Fig. 7] Fig. 7 is a sectional view of a battery according to Embodiment 4.
[Fig. 8] Fig. 8 is a sectional view of a battery according to Embodiment 5.
[Fig. 9] Fig. 9 is a sectional view of a battery according to Embodiment 6.
[Fig. 10] Fig. 10 is a sectional view of a battery according to Embodiment 7.
[Fig. 11] Fig. 11 is a sectional view of a battery according to Embodiment 8.
[Fig. 12] Fig. 12 is a sectional view of a battery according to Embodiment 9.
[Fig. 13] Fig. 13 is a flowchart illustrating an example of a method for manufacturing a battery according to an embodiment.
[Fig. 14] Fig. 14 is a flowchart illustrating another example of a method for manufacturing a battery according to the embodiment.

### Description of Embodiments

### (Overview of Present Disclosure)

A battery according to one aspect of the present disclosure is a battery including a power-generating element having a plurality of parallel laminates that are electrically series-connected and laminated. The plurality of parallel laminates each include an odd number of battery cells that are electrically connected in parallel and laminated. The odd number of battery cells each include an electrode layer, a counter electrode layer, and a solid electrolyte layer positioned between the electrode layer and the counter electrode layer. The battery further includes: an electrode insulating member that covers the electrode layer on a first side surface of each of the plurality of parallel laminates; a counter electrode connector that covers the first side surface and the electrode insulating member and is electrically connected to the counter electrode layer in each of the plurality of parallel laminates; a counter electrode insulating member that covers the counter electrode layer on a second side surface of each of the plurality of parallel laminates; and an electrode connector that covers the second side surface and the counter electrode insulating member and is electrically connected to the electrode layer in each of the plurality of parallel laminates.

A high-performance battery can thus be provided. For example, a large-capacity, high-voltage battery with excellent energy density can be realized.

Specifically, since the electrical connection of the plurality of battery cells is performed in a small volume by the counter electrode connector and the electrode connector provided on the side surfaces of the plurality of parallel laminates, the energy density can be increased. The electrode insulating member and the counter electrode insulating member are also provided on the side surfaces of the plurality of parallel laminates. This makes it possible to suppress the occurrence of short-circuiting between the electrode layer and the counter electrode layer, and to improve the reliability of the battery.

The odd number of battery cells connected in parallel can increase the capacity of the battery. The capacity of the battery can be adjusted by the product of the number of laminated battery cells included in the parallel laminate and the area. Since two parameters, the number of laminated battery cells and the area, can be used, the capacity can be adjusted over a wide range and with high precision.

The series-connected parallel laminates can increase the voltage of the battery. In this aspect, since the number of laminated battery cells included in the parallel laminate is an odd number, the polarity is different between the upper and lower surfaces of the parallel laminate. Therefore, the parallel laminates can be easily connected in series by directly laminating the parallel laminates, for example. This eliminates the need to provide a connector related to series connection, energy density can be further increased.

As a method for realizing a large-capacity, high-voltage battery, it is also conceivable to connect a plurality of battery cells in series to form a plurality of series laminates, and then connect the plurality of series laminates in parallel. However, when a plurality of battery cells are connected in series, variations in capacity of each battery cell may easily cause uneven charging and discharging, creating a risk of overcharging or overdischarging.

In this aspect, a plurality of battery cells are connected in parallel to form a plurality of parallel laminates, and then the plurality of parallel laminates are connected in series. In this case, even if variations in capacity occur in the odd number of battery cells included in the parallel laminate, the variations are averaged out by configuring the parallel laminate. This can suppress variations in capacity among the parallel laminates, thus reducing the risk of overcharging and overdischarging. That is, the reliability of the battery can be improved. The battery according to this aspect is advantageous even when variations in capacity occur in the plurality of battery cells.

For example, no insulating layer may be disposed between two of the plurality of parallel laminates, which are adjacent to each other in a laminating direction.

This can further increase the energy density of the battery.

For example, the electrode layer and the counter electrode layer each include a current collector. In two of the plurality of parallel laminates, which are adjacent to each other in a laminating direction, one of the electrode layer and the counter electrode layer in an uppermost layer of the lower parallel laminate may share a current collector with the other of the electrode layer and the counter electrode layer in a lowermost layer of the upper parallel laminate.

This can further increase the energy density of the battery.

For example, the odd number of battery cells may have the same size.

The battery cells of the same size can be easily formed by laminating a plurality of battery cells and then performing batch cutting of the end faces of the battery cells. The batch cutting can suppress gradual increase or decrease in film thickness at the beginning and end of coating of each layer, for example. That is, each area of the electrode layer, counter electrode layer, and solid electrolyte layer in plan view can be accurately determined. This can reduce variations in capacity of the battery cells. The capacity of the battery can thus be obtained with high accuracy.

For example, the electrode layer and the counter electrode layer may each include a current collector and an active material layer laminated on the current collector. The current collector of the counter electrode layer may have a counter electrode protrusion that protrudes with respect to the active material layer of the counter electrode layer on the first side surface. The counter electrode connector may be in contact with the counter electrode protrusion. The current collector of the electrode layer may have an electrode protrusion that protrudes with respect to the active material layer of the electrode layer on the second side surface. The electrode connector may be in contact with the electrode protrusion. The counter electrode protrusion may, for example, protrude with respect to the active material layer of the electrode layer on the first side surface. The electrode protrusion may, for example, protrude with respect to the active material layer of the counter electrode layer on the second side surface.

The protruding current collector can increase the contact area between each of the counter electrode connector and the electrode connector and the current collector. This makes it possible to reduce contact resistance and improve battery characteristics such as rapid charging and discharging.

For example, the current collectors of the electrode layer and the counter electrode layer may have their end faces aligned when viewed from the laminating direction, on each of the first side surface and the second side surface.

By retracting the end face of the active material layer after batch cutting, for example, the end of the current collector can be protruded. Since the batch cutting can be used, the capacity of the battery can be obtained with high accuracy.

For example, the battery according to one aspect of the present disclosure may further include: a first covering member that covers the first side surface between the two counter electrode connectors adjacent in the laminating direction; and a second covering member that covers the second side surface between the two electrode connectors adjacent in the laminating direction. The first covering member and the second covering member may each have ion conductivity or insulation properties.

This makes it possible to suppress the occurrence of short-circuiting between adjacent parallel laminates, and to improve the reliability of the battery.

For example, the battery according to one aspect of the present disclosure may further include: an electrode extraction terminal provided on a first major surface of the power-generating element; and a counter electrode extraction terminal provided on a second major surface opposite to the first major surface of the power-generating element.

This makes it possible to improve mounting performance of the battery and the degree of freedom in connection to other members.

For example, the battery according to one aspect of the present disclosure may further include a counter electrode extraction terminal and an electrode extraction terminal provided on a first major surface of the power-generating element.

This makes it possible to improve the mounting performance of the battery and the degree of freedom in connection to other members. Since both the positive and negative electrode extraction terminals are provided on the same major surface, compact mounting of the battery can be realized. Specifically, a connection terminal pattern (also referred to as footprint) formed on the mounting board can be reduced in size. Since mounting is possible with the major surface of the power-generating element and the mounting board disposed in parallel, it is possible to realize low-profile mounting on the mounting board.

For example, the major surface of the power-generating element is larger in area than the side surface of the power-generating element. Since the extraction terminal is provided on the larger surface, the battery can be mounted over a larger area, thus increasing the reliability of the connection. For example, the shape and arrangement of the extraction terminals can be adjusted depending on the wiring layout of the mounting board. This can also increase the degree of freedom in connection.

For example, the battery according to one aspect of the present disclosure may further include: a side insulating layer that covers a side surface of the power-generating element from one end to the other end of the power-generating element in the laminating direction; and a side conductive part disposed along the side insulating layer. The side conductive part may electrically connect a second major surface of the power-generating element, which is opposite to the first major surface, to one of the counter electrode extraction terminal and the electrode extraction terminal.

The side conductive part realizes routing from one major surface to the other major surface in small volume. This can increase the energy density.

For example, the side insulating layer may cover the first side surface and the counter electrode connector, or may cover the second side surface and the electrode connector.

This makes it possible to suppress the occurrence of short-circuiting between the side conductive part and each of the electrode connector and the counter electrode connector, and to improve the reliability of the battery.

For example, the battery according to one aspect of the present disclosure may further include a sealing member that at least partially exposes each of the counter electrode extraction terminal and the electrode extraction terminal and seals the power-generating element, the counter electrode connector, and the electrode connector.

This can protect the power-generating element from outside air, water, and the like, thus further increasing the reliability of the battery.

For example, the electrode insulating member may cover the electrode layer and a part of the counter electrode layer on the first side surface. The counter electrode insulating member may cover the counter electrode layer and a part of the electrode layer on the second side surface.

The electrode insulating member partially covering the counter electrode layer makes it possible to sufficiently suppress exposure of the electrode layer without being covered with the electrode insulating member. The active material layer is generally formed of a powder material, and thus has very fine irregularities on its end face. This further improves the adhesion strength of the electrode insulating member, thus improving the insulation reliability. The same applies to the counter electrode insulating member. The reliability of the battery can thus be further improved.

For example, at least one of the counter electrode connector and the electrode connector may include a plurality of first conductive members that contact each of a plurality of the counter electrode layers or each of a plurality of the electrode layers, and a second conductive member that covers the plurality of first conductive members. Alternatively, for example, at least one of the counter electrode connector and the electrode connector may include a first conductive member that contacts a plurality of the counter electrode layers or a plurality of the electrode layers, and a second conductive member that covers the first conductive member.

At least one of the counter electrode connector and the electrode connector can be formed using a plurality of materials having different properties. For example, the material used for the first conductive member can be selected with focus on high conductivity and alloying with metal contained in the current collector. The material used for the second conductive member, on the other hand, can be selected with focus on flexibility, impact resistance, chemical stability, cost, ease of spreading in application, and the like. The materials suitable for each member can thus be selected, making it possible to improve the performance of the battery and the ease of manufacturing the battery.

For example, at least one of the electrode insulating member and the counter electrode insulating member may contain resin.

This can improve the impact resistance of the battery. It is also possible to reduce stress applied to the battery due to temperature changes in the battery or due to expansion and contraction during charging and discharging.

A method for manufacturing a battery according to one aspect of the present disclosure includes the steps of: preparing a plurality of battery cells, each including an electrode layer, a counter electrode layer, and a solid electrolyte layer positioned between the electrode layer and the counter electrode layer; forming a laminate structure by laminating a plurality of battery cells, in which a plurality of parallel laminates are laminated, each having an odd number of battery cells laminated such that the arrangement order of the electrode layer, the counter electrode layer, and the solid electrolyte layer is alternated for every battery cell; covering the electrode layer with an electrode insulating member on a first side surface of each of the plurality of parallel laminates, and covering the counter electrode layer with a counter electrode insulating member on a second side surface of each of the plurality of parallel laminates; and covering the first side surface and the electrode insulating member with a counter electrode connector electrically connected to the counter electrode layer, and covering the second side surface and the counter electrode insulating member with an electrode connector electrically connected to the electrode layer, in each of the plurality of parallel laminates.

The high-performance battery described above can thus be manufactured.

For example, the electrode layer and the counter electrode layer may each include a current collector and an active material layer laminated on the current collector. The method for manufacturing a battery may further include the step of protruding the current collector of the counter electrode layer with respect to the active material layer of the counter electrode layer on the first side surface, and protruding the current collector of the electrode layer with respect to the active material layer of the electrode layer on the second side surface.

The protruding current collector makes it possible to increase the contact area between each of the counter electrode connector and the electrode connector and the current collector. This can reduce the contact resistance, thus improving the battery characteristics such as rapid charging and discharging.

For example, protruding the current collector may be performed by at least one of laser irradiation, cutting to size, polishing, sandblasting, brushing, etching, and plasma irradiation.

The current collector can thus be easily protruded.

Hereinafter, embodiments will be specifically described with reference to the drawings.

The embodiments described below all illustrate comprehensive or specific examples. The numerals, shapes, materials, constituent elements, the arrangement and connections of the constituent elements, steps, order of the steps, and the like discussed in the following embodiments are only exemplary and are not construed to limit the present disclosure. Among the constituent elements in the following embodiments, constituent elements not described in an independent claim will be described as optional constituent elements.

The drawings are schematic and not necessarily to scale. Therefore, for example, scales and the like do not necessarily match in each drawing. In addition, in each drawing, substantially the same configurations are denoted by the same reference numerals to omit or simplify overlapped description.

In the present specification, terms indicating the relationship between elements such as parallel and perpendicular, terms indicating the shape of elements such as rectangle or rectangular parallelepiped, and numerical ranges are expressions including substantially the same ranges, for example, differences of about several percent, rather than expressions indicating strict meanings only.

In the present specification and the drawings, an x-axis, a y-axis, and a z-axis indicate three axes of a three-dimensional orthogonal coordinate system. When a power-generating element of a battery has a rectangular shape in plan view, the x-axis and the y-axis correspond to directions parallel to a first side of the rectangle and a second side perpendicular to the first side, respectively. The z-axis corresponds to a laminating direction of a plurality of battery cells included in the power-generating element.

In the present specification, the "laminating direction" corresponds to the normal direction of major surfaces of a current collector and an active material layer. Further, in the present specification, the term "plan view" means a case of viewing from a direction perpendicular to the major surface of the power-generating element, unless otherwise specified, such as when used alone. A "plan view of a certain surface", such as a "plan view of a first side surface" means a case where the "certain surface" is viewed from the front.

In the present specification, the terms "top" and "bottom" do not refer to the upward direction (vertically above) and the downward direction (vertically below) in absolute space recognition, but are used as terms defined by relative positional relationships based on the laminating order in a laminating configuration. The terms "upper" and "lower" apply not only when two components are disposed apart from each other and another component lies between the two components but also when two components are disposed close to each other and the two components are in contact with each other. In the following description, the negative side of the z-axis is defined as "bottom" or "lower side", and the positive side of the z-axis is defined as "top" or "upper side".

In the present specification, the expression "covering A" means covering at least a part of "A". That is, the expression "covering A" includes not only "covering all of A" but also "covering only a part of A". "A" is, for example, a side surface, a major surface or the like of a predetermined member such as a layer or a terminal.

In the present specification, ordinal numbers, such as "first" and "second", do not mean the number of constituent components or the order thereof but are used to avoid confusion between constituent components of the same type and discriminate the components unless otherwise specified.

### (Embodiment 1)

A configuration of a battery according to Embodiment 1 will be described below.

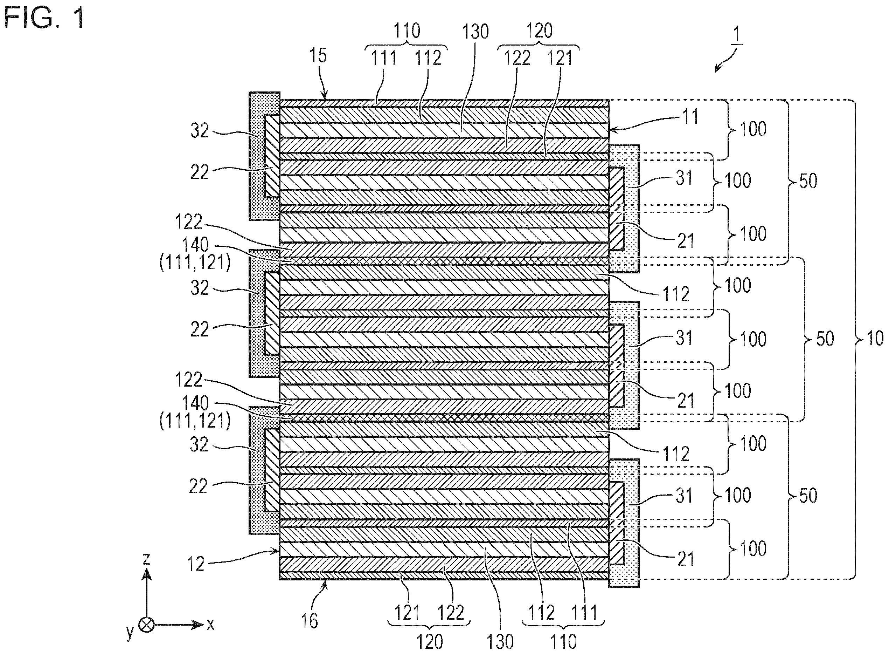

Fig. 1 is a sectional view of the battery according to this embodiment. As illustrated in Fig. 1, a battery 1 includes a power-generating element 10, an electrode insulating layer 21, a counter electrode insulating layer 22, a plurality of counter electrode connectors 31, and a plurality of electrode connectors 32. The battery 1 is an all-solid-state battery, for example.

### [1. Power-generating element]

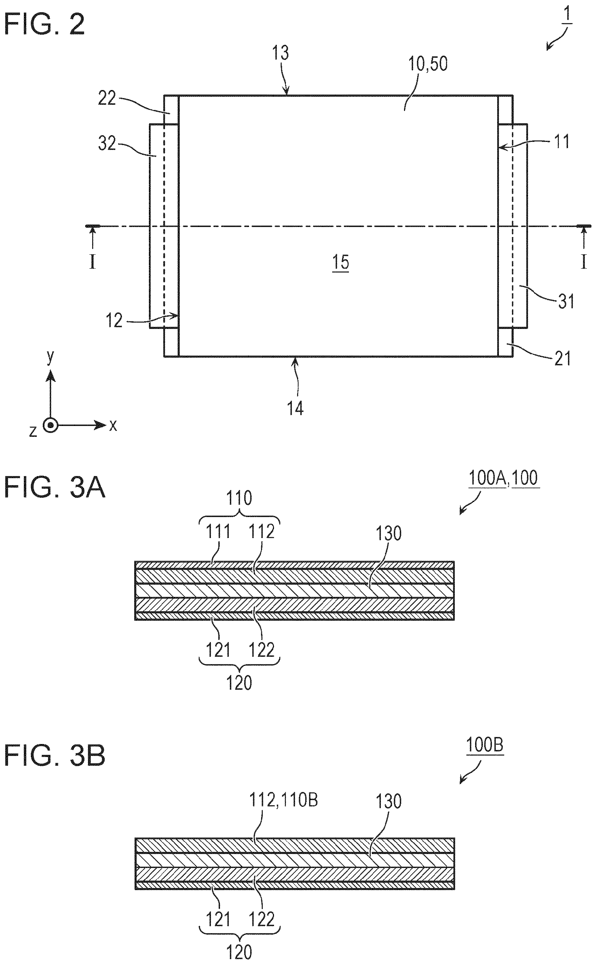

First, a specific configuration of the power-generating element 10 will be described with reference to Figs. 1 and 2. Fig. 2 is a top view of the battery 1 according to this embodiment. Fig. 1 illustrates a cross-section taken along line I-I in Fig. 2.

A plan view shape of the power-generating element 10 is a rectangle, for example, as illustrated in Fig. 2. That is, the power-generating element 10 has a flat rectangular parallelepiped shape. Here, "flat" means that the thickness (that is, the length in the z-axis direction) is shorter than each side (that is, the length in each of the x-axis direction and y-axis direction) or the maximum width of a major surface. The plan view shape of the power-generating element 10 may be another polygon such as a square, a hexagon or an octagon, or may be a circle, an ellipse or the like. In sectional views such as Fig. 1, the thickness of each layer is exaggerated to make it easier to understand the layered structure of the power-generating element 10.

As illustrated in Figs. 1 and 2, the power-generating element 10 includes four side surfaces 11, 12, 13, and 14 and two major surfaces 15 and 16. In this embodiment, the side surfaces 11, 12, 13, and 14 and the major surfaces 15 and 16 are all flat surfaces.

The side surfaces 11 and 12 face away from each other and are parallel to each other. The side surfaces 13 and 14 face away from each other and are parallel to each other. The side surfaces 11, 12, 13, and 14 are, for example, sections formed by batch cutting of a laminate of a plurality of battery cells 100.

The major surface 15 is an example of a second major surface. The major surface 16 is an example of a first major surface. The major surfaces 15 and 16 face away from each other and are parallel to each other. The major surface 15 is the uppermost surface of the power-generating element 10. The major surface 16 is the lowermost surface of the power-generating element 10. The major surfaces 15 and 16 are larger in area than the side surfaces 11, 12, 13, and 14.

As illustrated in Fig. 1, the power-generating element 10 includes a plurality of parallel laminates 50. The plurality of parallel laminates 50 each include an odd number of battery cells 100. In the example illustrated in Fig. 1, the plurality of parallel laminates 50 each include three battery cells 100, but may include five or more battery cells 100. Each parallel laminate 50 includes the same number of battery cells 100 but may include different numbers of battery cells 100. The battery cell 100 is a minimum battery configuration and is also referred to as a unit cell.

The odd number of battery cells 100 included in the parallel laminate 50 are electrically connected in parallel. The parallel connection is conducted by the counter electrode connectors 31 and electrode connectors 32. The plurality of parallel laminates 50 are electrically connected in series. The series connection is made by laminating the parallel laminates 50 in a laminating direction of the battery cells 100 (that is, the z-axis direction). Specific connections will be described later.

The battery 1 according to this embodiment is thus increased in capacity by configuring the parallel laminates 50 each having the odd number of battery cells 100 connected in parallel and laminated therein. The series connection of the plurality of parallel laminates 50 also increases the voltage.

The plurality of battery cells 100 each include an electrode layer 110, a counter electrode layer 120, and a solid electrolyte layer 130. The electrode layer 110 has an electrode current collector 111 and an electrode active material layer 112. The counter electrode layer 120 includes a counter electrode current collector 121 and a counter electrode active material layer 122. In each battery cell 100, the electrode current collector 111, electrode active material layer 112, solid electrolyte layer 130, counter electrode active material layer 122, and counter electrode current collector 121 are laminated in this order along the z-axis.

The electrode layer 110 is one of a positive electrode layer and a negative electrode layer of the battery cell 100. The counter electrode layer 120 is the other of the positive electrode layer and negative electrode layer of the battery cell 100. A case where the electrode layer 110 is the negative electrode layer and the counter electrode layer 120 is the positive electrode layer will be described below as an example.

Each layer of the battery cell 100 will be described below with reference to Fig. 3A. Fig. 3A is a sectional view of the battery cell 100 included in the power-generating element 10 according to this embodiment.

The electrode current collector 111 and the counter electrode current collector 121 are each a conductive foil-like, plate-like, or mesh-like member. The electrode current collector 111 and the counter electrode current collector 121 may each be a conductive thin film, for example. As the material of the electrode current collector 111 and the counter electrode current collector 121, metal such as stainless steel (SUS), aluminum (Al), copper (Cu), and nickel (Ni) can be used, for example. The electrode current collector 111 and the counter electrode current collector 121 may be formed using different materials.

The electrode current collector 111 and the counter electrode current collector 121 each have a thickness of, for example, greater than or equal to 5 µm and less than or equal to 100 µm, but the present disclosure is not limited thereto. The electrode active material layer 112 is in contact with a major surface of the electrode current collector 111. The electrode current collector 111 may include a current collector layer containing a conductive material, which is provided in a portion that is in contact with the electrode active material layer 112. The counter electrode active material layer 122 is in contact with a major surface of the counter electrode current collector 121. The counter electrode current collector 121 may include a current collector layer containing a conductive material, which is provided in a portion that is in contact with the counter electrode active material layer 122.

The electrode active material layer 112 is disposed on the major surface of the electrode current collector 111 on the counter electrode layer 120 side. The electrode active material layer 112 contains a negative electrode active material, for example, as an electrode material. The electrode active material layer 112 is disposed facing the counter electrode active material layer 122 across the solid electrolyte layer 130.

Examples of the negative electrode active material contained in the electrode active material layer 112 include graphite and metallic lithium. As the material of the negative electrode active material, various materials that can extract and insert ions of lithium (Li), magnesium (Mg) or the like can be used.

As the material contained in the electrode active material layer 112, a solid electrolyte such as an inorganic solid electrolyte may be used, for example. As the inorganic solid electrolyte, a sulfide solid electrolyte, an oxide solid electrolyte or the like can be used, for example. As the sulfide solid electrolyte, a mixture of lithium sulfide (Li₂S) and diphosphorus pentasulfide (P₂S₅) can be used, for example. As the material contained in the electrode active material layer 112, a conductive material such as acetylene black, a binding binder such as polyvinylidene fluoride, or the like may be used.

The electrode active material layer 112 is formed by applying a coating material paste, which is obtained by kneading the material contained in the electrode active material layer 112 with a solvent, onto the major surface of the electrode current collector 111, followed by drying. To increase the density of the electrode active material layer 112, the electrode layer 110 (also referred to as an electrode plate) including the electrode active material layer 112 and the electrode current collector 111 may be pressed after drying. The thickness of the electrode active material layer 112 is, for example, greater than or equal to 5 µm and less than or equal to 300 µm, but is not limited thereto.

The counter electrode active material layer 122 is disposed on the major surface of the counter electrode current collector 121 on the electrode layer 110 side. The counter electrode active material layer 122 is a layer containing a positive electrode material such as an active material, for example. The positive electrode material is a material constituting the counter electrode of the negative electrode material. The counter electrode active material layer 122 contains a positive electrode active material, for example.

Examples of the positive electrode active material contained in the counter electrode active material layer 122 include lithium cobalt oxide composite oxide (LCO), lithium nickel oxide composite oxide (LNO), lithium manganate composite oxide (LMO), lithium-manganese-nickel composite oxide (LMNO), lithium-manganese-cobalt composite oxide (LMCO), lithium-nickel-cobalt composite oxide (LNCO), lithium-nickel-manganese-cobalt composite oxide (LNMCO), and the like. As the positive electrode active material, various materials that can extract and insert ions of Li, Mg or the like can be used.

As the material contained in the counter electrode active material layer 122, for example, a solid electrolyte such as an inorganic solid electrolyte may be used. As the inorganic solid electrolyte, a sulfide solid electrolyte or an oxide solid electrolyte can be used. As the sulfide solid electrolyte, for example, a mixture of Li₂S and P₂S₅ can be used. The surface of the positive electrode active material may be coated with a solid electrolyte. Further, as the material contained in the counter electrode active material layer 122, a conductive material such as acetylene black, a binding binder such as polyvinylidene fluoride, or the like may be used.

The counter electrode active material layer 122 is formed by applying a coating material paste, which is obtained by kneading the material contained in the counter electrode active material layer 122 with a solvent, onto the major surface of the counter electrode current collector 121, followed by drying. To increase the density of the counter electrode active material layer 122, the counter electrode layer 120 (also referred to as a counter electrode plate) including the counter electrode active material layer 122 and the counter electrode current collector 121 may be pressed after drying. The thickness of the counter electrode active material layer 122 is, for example, greater than or equal to 5 µm and less than or equal to 300 µm, but is not limited thereto.

The solid electrolyte layer 130 is disposed between electrode active material layer 112 and counter electrode active material layer 122. The solid electrolyte layer 130 is in contact with each of the electrode active material layer 112 and the counter electrode active material layer 122. Solid electrolyte layer 130 is a layer containing an electrolyte material. As the electrolyte material, generally known electrolytes for batteries can be used. The solid electrolyte layer 130 may have a thickness of greater than or equal to 5 µm and less than or equal to 300 µm, or may have a thickness of greater than or equal to 5 µm and less than or equal to 100 µm.

The solid electrolyte layer 130 contains a solid electrolyte. Examples of the solid electrolyte include an inorganic solid electrolyte. As the inorganic solid electrolyte, a sulfide solid electrolyte, an oxide solid electrolyte or the like can be used. As the sulfide solid electrolyte, a mixture of Li₂S and P₂S₅ can be used, for example. The solid electrolyte layer 130 may also contain a binding binder such as polyvinylidene fluoride, for example, in addition to the electrolyte material.

In this embodiment, the electrode active material layer 112, the counter electrode active material layer 122, and the solid electrolyte layer 130 are maintained in a parallel flat plate shape. This makes it possible to suppress the occurrence of cracks or collapse due to curvature. The electrode active material layer 112, the counter electrode active material layer 122, and the solid electrolyte layer 130 may be smoothly curved together.

More specifically, in the battery cell 100, the electrode current collector 111, the electrode active material layer 112, the solid electrolyte layer 130, the counter electrode active material layer 122, and the counter electrode current collector 121 have the same shape and size, and their outlines match. That is, the battery cell 100 has a flat rectangular parallelepiped shape.

The plurality of battery cells 100 configured as described above have substantially the same configuration. For example, the plurality of battery cells 100 have the same size. Specifically, after the formation of a laminate corresponding to the power-generating element 10, the flat side surfaces 11, 12, 13, and 14 are formed by batch cutting of their side surfaces. With the cutting direction matching the laminating direction, the plurality of battery cells 100 having the same size can be formed.

The side surface 11 of the power-generating element 10 is formed by connecting the plurality of parallel laminates 50 with their first side surfaces flush with each other. Similarly, the side surface 12 of the power-generating element 10 is formed by connecting the plurality of parallel laminates 50 with their second side surfaces flush with each other.

As illustrated in Fig. 1, the order of the layers constituting the battery cell 100 is reversed between two adjacent battery cells 100 in the parallel laminate 50. In other words, the plurality of battery cells 100 are laminated along the z-axis, with the order of the layers constituting the battery cells 100 being alternated. In this embodiment, an odd number of battery cells 100 are laminated and included in the parallel laminate 50, thus causing the lowermost layer and uppermost layer of the parallel laminate 50 to serve as current collectors of different polarities. In the example illustrated in Fig. 1, the lowermost layer serves as the counter electrode current collector 121 of the counter electrode layer 120, and the uppermost layer serves as the electrode current collector 111 of the electrode layer 110. The three parallel laminates 50 have the same configuration.

Therefore, the series connection can be easily realized by laminating the plurality of parallel laminates 50 in the z-axis direction. Specifically, two parallel laminates 50 can be directly laminated so that the current collectors of different polarities face each other. That is, no insulating layer is disposed between the parallel laminates 50 adjacent in the laminating direction. More specifically, in two adjacent parallel laminates 50, the uppermost electrode layer 110 of the lower parallel laminate 50 and the lowermost counter electrode layer 120 of the upper parallel laminate 50 share the current collector.

A bipolar current collector 140 illustrated in Fig. 1 is shared by two parallel laminates 50. The bipolar current collector 140 functions as the electrode current collector 111 of one parallel laminate 50 and functions as the counter electrode current collector 121 of the other parallel laminate 50. Specifically, the electrode active material layer 112 is disposed on the lower surface of the bipolar current collector 140, and the counter electrode active material layer 122 is disposed on the upper surface thereof.

In each parallel laminate 50, two adjacent electrode layers 110 of two adjacent battery cells 100 share one electrode current collector 111. That is, the electrode active material layer 112 is disposed on the upper surface and lower surface of one electrode current collector 111. Similarly, two adjacent counter electrode layers 120 share one counter electrode current collector 121. That is, the counter electrode active material layer 122 is disposed on the upper surface and lower surface of one counter electrode current collector 121.

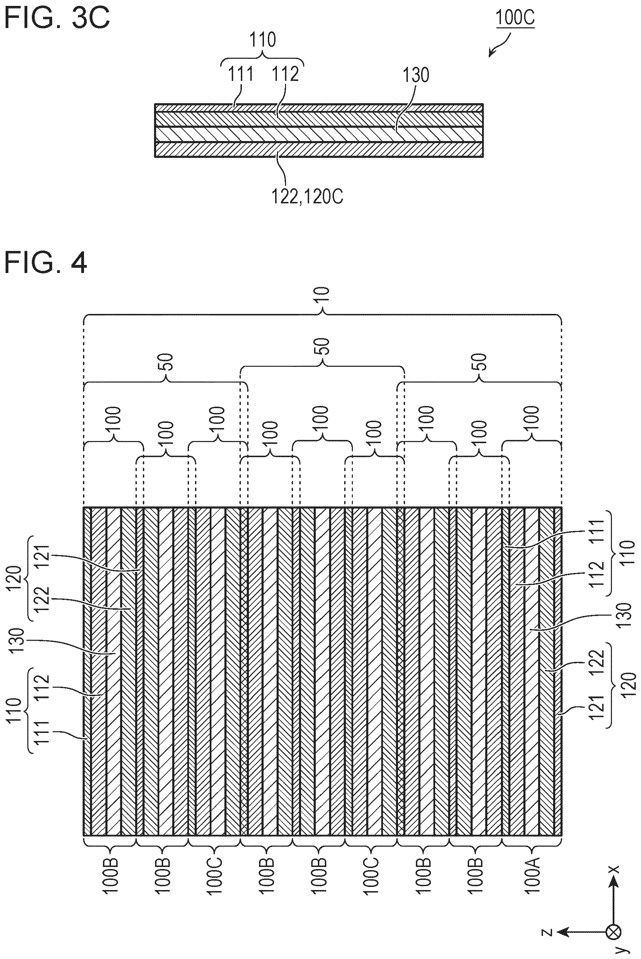

Sharing the current collectors can reduce the thickness of the power-generating element 10, thus increasing the energy density of the battery 1. The power-generating element 10 that shares the current collectors as described above is formed by combining and laminating not only the battery cell 100 illustrated in Fig. 3A but also battery cells 100B and 100C illustrated in Figs. 3B and 3C. Here, the battery cell 100 illustrated in Fig. 3A will be described as a battery cell 100A.

The battery cell 100B illustrated in Fig. 3B has a configuration obtained by omitting the electrode current collector 111 from the battery cell 100A illustrated in Fig. 3A. That is, an electrode layer 110B of the battery cell 100B includes only the electrode active material layer 112.

The battery cell 100C illustrated in Fig. 3C has a configuration obtained by omitting the counter electrode current collector 121 from the battery cell 100A illustrated in Fig. 3A. That is, a counter electrode layer 120C of the battery cell 100C includes only the counter electrode active material layer 122.

Fig. 4 is a sectional view illustrating the power-generating element 10 according to this embodiment. Fig. 4 illustrates only the power-generating element 10 of Fig. 1. As illustrated in Fig. 4, the battery cell 100A is disposed in the lowermost layer, and two battery cells 100B and one battery cell 100C are alternately and repeatedly laminated upward. The battery cells 100B are laminated in a direction vertically opposite to the direction illustrated in Fig. 3B. The power-generating element 10 is thus formed.

The method for forming the power-generating element 10 is not limited to the above. For example, the battery cell 100A may be disposed in the uppermost layer. Alternatively, the battery cell 100A may be disposed in a position different from both the uppermost layer and lowermost layer. Alternatively, a plurality of battery cells 100A may be used. One current collector may be subjected to double-sided coating, thus forming a unit of two battery cells 100 sharing the current collector. The units thus formed may be laminated.

### [2. Insulating Layer]

Next, the electrode insulating layer 21 and the counter electrode insulating layer 22 will be described.

The electrode insulating layer 21 is an example of an electrode insulating member. As illustrated in Fig. 1, the electrode insulating layer 21 covers the electrode layer 110 on the first side surface of each of the plurality of parallel laminates 50. Specifically, on the side surface 11 of the power-generating element 10, the electrode insulating layer 21 covers the plurality of electrode layers 110, the plurality of solid electrolyte layers 130, and parts of the plurality of counter electrode active material layers 122, which are included in the plurality of parallel laminates 50. On the side surface 11, the electrode insulating layer 21 does not cover any of the plurality of counter electrode current collectors 121 included in the plurality of parallel laminates 50.

In the parallel laminate 50, the electrode layers 110 of two adjacent battery cells 100 share one electrode current collector 111, and thus the electrode insulating layer 21 collectively covers the two adjacent electrode layers 110. Specifically, the electrode insulating layer 21 continuously covers the counter electrode active material layer 122, the solid electrolyte layer 130, the electrode active material layer 112, and the shared electrode current collector 111 in one battery cell 100 as well as the electrode active material layer 112, the solid electrolyte layer 130, and the counter electrode active material layer 122 in the other battery cell 100. The electrode insulating layer 21 thus covering the solid electrolyte layer 130 and the counter electrode active material layer 122, besides the electrode layer 110, reduces a possibility of the electrode layer 110 being exposed on the side surface 11 even when the width (length in the z-axis direction) of the electrode insulating layer 21 varies due to manufacturing variations thereof. This reduces the possibility that the electrode layer 110 and the counter electrode connector 31 come into contact with each other on the side surface 11 and cause short-circuiting. The reliability of the battery 1 can thus be improved. The electrode insulating layer 21 does not need to cover the counter electrode active material layer 122. The electrode insulating layer 21 does not need to cover the solid electrolyte layer 130.

The counter electrode insulating layer 22 is an example of a counter electrode insulating member. As illustrated in Fig. 1, the counter electrode insulating layer 22 covers the counter electrode layer 120 on the second side surface of each of the plurality of parallel laminates 50. Specifically, on the side surface 12 of the power-generating element 10, the counter electrode insulating layer 22 covers the plurality of counter electrode layers 120, the plurality of solid electrolyte layers 130, and parts of the plurality of electrode active material layers 112, which are included in the plurality of parallel laminates 50. On the side surface 12, the counter electrode insulating layer 22 does not cover any of the plurality of electrode current collectors 111 included in the plurality of parallel laminates 50.

The electrode insulating layer 21 and the counter electrode insulating layer 22 penetrate into the irregularities of the end faces of the electrode active material layer 112, the counter electrode active material layer 122, and the solid electrolyte layer 130, thereby improving the adhesion strength and thus improving the reliability of the battery 1. The electrode active material layer 112, the counter electrode active material layer 122, and the solid electrolyte layer 130 can each be formed of a powdered material. In this case, each of those layers has very fine irregularities on its end face.

The electrode insulating layer 21 and the counter electrode insulating layer 22 each have a stripe shape when the side surface 11 or 12 is viewed from the front. As illustrated in Fig. 2, the electrode insulating layer 21 and the counter electrode insulating layer 22 are provided from one end to the other end of the side surface 11 or 12 in the y-axis direction. Neither the counter electrode connector 31 nor the electrode connector 32 is provided at both ends of the side surfaces 11 and 12 in the y-axis direction. Therefore, the electrode insulating layer 21 and the counter electrode insulating layer 22 may cover both ends of the side surface 11 or 12 in the y-axis direction from the upper end to the lower end along the z-axis direction. That is, the electrode insulating layer 21 and the counter electrode insulating layer 22 may each be formed in a ladder shape when the side surface 11 or 12 is viewed from the front.

The electrode insulating layer 21 and the counter electrode insulating layer 22 are each formed using an electrically insulating material. For example, the electrode insulating layer 21 and the counter electrode insulating layer 22 each contain resin. The resin is, for example, an epoxy resin, but is not limited thereto. Note that an inorganic material may be used as the insulating material. Insulating materials that can be used are selected based on various properties such as flexibility, gas barrier properties, impact resistance, and heat resistance. The electrode insulating layer 21 and the counter electrode insulating layer 22 are formed using the same material, but may be formed using different materials.

In this embodiment, among all the current collectors included in the power-generating element 10, the bipolar current collector 140, the electrode current collector 111 in the uppermost layer of the power-generating element 10, and the lowermost layer in the power-generating element 10 Neither of the counter electrode current collectors 121 is covered with an insulating member on each of the side surfaces 11 and 12. The remaining current collector included in the power-generating element 10 is covered with an insulating member on either side surfaces 11 or 12. By connecting the bipolar current collector 140 to the counter electrode connector 31 on the side surface 11 and connecting the electrode connector 32 on the side surface 12, the parallel laminates 50 can be connected in series.

The uppermost electrode current collector 111 of the power-generating element 10 may be covered with the electrode insulating layer 21 on the side surface 11. The lowermost counter electrode current collector 121 of the power-generating element 10 may be covered with the counter electrode insulating layer 22 on the side surface 12. This can further suppress the occurrence of short-circuiting.

### [3. Connector]

Next, the counter electrode connector 31 and the electrode connector 32 will be described.

The counter electrode connector 31 is a conductive part that covers the first side surface and the electrode insulating layer 21 and is connected to the plurality of counter electrode layers 120 in each of the plurality of parallel laminates 50. That is, the counter electrode connector 31 is provided for each parallel laminate 50. As illustrated in Fig. 1, three counter electrode connectors 31 are provided so as to cover the side surface 11. The three counter electrode connectors 31 are disposed with predetermined gaps so as not to come into contact with each other.

Specifically, the counter electrode connector 31 contacts and covers the end face of each of the plurality of counter electrode current collectors 121 on the side surface 11. In this embodiment, the counter electrode connector 31 also contacts and covers at least a portion of each end face of the plurality of counter electrode active material layers 122. The counter electrode connector 31 penetrating into the irregularities on the end face of the counter electrode active material layer 122 improves the adhesion strength and thus improves the reliability of the battery 1.

The electrode connector 32 is a conductive part that covers the second side surface and the counter electrode insulating layer 22 and is connected to the plurality of electrode layers 110 in each of the plurality of parallel laminates 50. That is, the electrode connector 32 is provided for each parallel laminate 50. As illustrated in Fig. 1, three electrode connectors 32 are provided so as to cover the side surface 12. The three electrode connectors 32 are disposed with predetermined gaps so as not to come into contact with each other.

Specifically, the electrode connector 32 contacts and covers the end face of each of the plurality of electrode current collectors 111 on the side surface 12. In this embodiment, the electrode connector 32 also contacts and covers at least a portion of each end face of the plurality of electrode active material layers 112. The electrode connector 32 penetrating into the irregularities on the end face of the electrode active material layer 112 improves the adhesion strength and thus improves the reliability of the battery 1.

The bipolar current collector 140 is also the electrode current collector 111 and also the counter electrode current collector 121. The bipolar current collector 140 is in contact with and covered with the counter electrode connector 31 on the side surface 11, and is in contact with and covered with the electrode connector 32 on the side surface 12. The counter electrode connector 31 in contact with the bipolar current collector 140 is the counter electrode connector 31 of the parallel laminate 50 including the bipolar current collector 140 as the counter electrode current collector 121 (that is, the upper parallel laminate 50 in the example of Fig. 1). The counter electrode connector 31 of the upper parallel laminate 50 may be in contact with the electrode active material layer 112 of the lower parallel laminate 50. Similarly, the electrode connector 32 in contact with the bipolar current collector 140 is the electrode connector 32 of the parallel laminate 50 including the bipolar current collector 140 as the electrode current collector 111 (that is, the lower parallel laminate 50 in the example of Fig. 1). The electrode connector 32 of the lower parallel laminate 50 may be in contact with the counter electrode active material layer 122 of the upper parallel laminate 50.

The counter electrode connector 31 and the electrode connector 32 each have a stripe shape when the side surface 11 or 12 is viewed from the front. As illustrated in Fig. 2, the counter electrode connector 31 and the electrode connector 32 are not provided at both ends of the side surface 11 or 12 in the y-axis direction. The both ends are areas where there is a high risk of collapse of the active material layer or occurrence of short-circuiting. By providing the counter electrode connector 31 and the electrode connector 32 while avoiding the both ends, the reliability of the battery 1 can be improved.

The counter electrode connector 31 and the electrode connector 32 are formed using a conductive resin material or the like. Alternatively, the counter electrode connector 31 and the electrode connector 32 may be formed using a metal material such as solder. The conductive material that can be used is selected based on various properties such as flexibility, gas barrier properties, impact resistance, heat resistance, and solder wettability. The counter electrode connector 31 and the electrode connector 32 are formed using the same material, but may be formed using different materials.

Focusing on one parallel laminate 50, the counter electrode connector 31 provided on the first side surface of the one parallel laminate 50 and the electrode connector 32 provided on the second side surface of the one parallel laminate 50 conduct parallel connection of all the battery cells 100 included in the one parallel laminate 50. For each parallel laminate 50, three battery cells 100 are connected in parallel by the counter electrode connector 31 and the electrode connector 32. The counter electrode connector 31 and the electrode connector 32 can each be realized in a small volume along the side surface 11 or 12 of the parallel laminate 50. This can increase the energy density of the battery 1.

### (Embodiment 2)

Next, a battery according to Embodiment 2 will be described.

The battery according to Embodiment 2 differs from the battery according to Embodiment 1 in including an end face covering member. Hereinafter, differences from Embodiment 1 will be mainly described and description of similarities will be omitted or simplified.

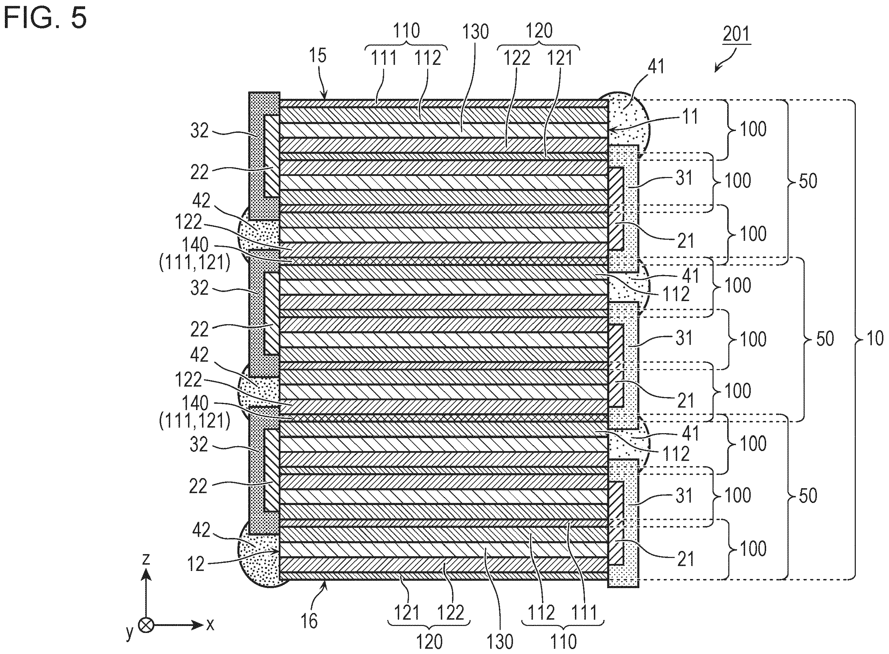

Fig. 5 is a sectional view of a battery 201 according to this embodiment. As illustrated in Fig. 5, the battery 201 includes end face covering members 41 and 42, in addition to the configuration of the battery 1 according to Embodiment 1.

The end face covering member 41 is an example of a first covering member, and covers the side surface 11 between two adjacent counter electrode connectors 31. For example, the end face covering member 41 covers a portion of the side surface 11 of the power-generating element 10, which is not covered with either the counter electrode connector 31 or the electrode insulating layer 21.

In the example illustrated in Fig. 5, the end face covering member 41 also covers the surface of the counter electrode connector 31, but the present disclosure is not limited to this example. The end face covering member 41 does not need to be in contact with the counter electrode connector 31. Alternatively, the end face covering member 41 may be provided so as to cover the entire side surface 11 in plan view of the side surface 11.

The end face covering member 42 is an example of a second covering member, and covers the side surface 12 between two adjacent electrode connectors 32. For example, the end face covering member 42 covers a portion of the side surface 12 of the power-generating element 10, which is not covered with either the electrode connector 32 or the counter electrode insulating layer 22.

In the example illustrated in Fig. 5, the end face covering member 42 also covers the surface of the electrode connector 32, but the present disclosure is not limited to this example. The end face covering member 42 does not need to be in contact with the electrode connector 32. Alternatively, the end face covering member 42 may be provided so as to cover the entire side surface 12 in plan view of the side surface 12.

The end face covering members 41 and 42 have ion conductivity or insulation properties. That is, both of the end face covering members 41 and 42 have no electron conductivity. This can suppress the occurrence of short-circuiting between two adjacent counter electrode connectors 31 and short-circuiting between two adjacent electrode connectors 32.

The end face covering members 41 and 42 are formed using the same material, for example. The end face covering members 41 and 42 may be formed using the same material as the solid electrolyte layer 130. For example, the solid electrolyte layer 130 may protrude from each end face of the electrode layer 110 and counter electrode layer 120 on the side surfaces 11 and 12. The protrusions of the solid electrolyte layer 130 may function as the end face covering members 41 and 42. The solid electrolyte layer 130 may protrude outward from the counter electrode connector 31 (that is, on the positive side of the x-axis) on the side surface 11. The solid electrolyte layer 130 may protrude outward from the electrode connector 32 (that is, on the negative side of the x-axis) on the side surface 12. This can reduce the possibility of short-circuiting between the counter electrode connectors 31 and short-circuiting between the electrode connectors 32.

### (Embodiment 3)

Next, a battery according to Embodiment 3 will be described.

The battery according to Embodiment 3 is different from the battery according to Embodiment 1 in that the counter electrode connector and the electrode connector are each formed using a plurality of different materials. Hereinafter, differences from Embodiment 1 will be mainly described and description of similarities will be omitted or simplified.

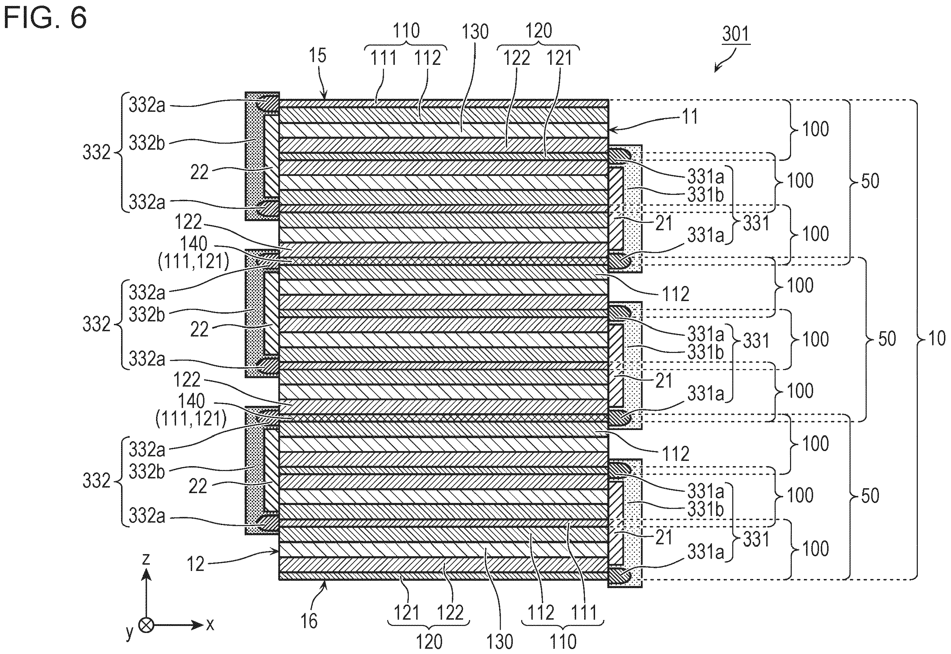

Fig. 6 is a sectional view of a battery 301 according to this embodiment. As illustrated in Fig. 6, the battery 301 includes a counter electrode connector 331 and an electrode connector 332, instead of the counter electrode connector 31 and the electrode connector 32 in the battery 1 according to Embodiment 1.

The counter electrode connector 331 includes a plurality of first conductive members 331a and a second conductive member 331b. The second conductive member 331b is the same as the counter electrode connector 31 according to Embodiment 1, except that it covers the plurality of first conductive members 331a. In this embodiment, the second conductive member 331b conducts parallel connection of a plurality of battery cells 100 in each parallel laminate 50.

The plurality of first conductive members 331a contact each of the plurality of counter electrode layers 120 on the side surface 11. Specifically, the first conductive member 331a is provided for each counter electrode current collector 121, and is in contact with the end face of the counter electrode current collector 121 and the end faces of the counter electrode active material layers 122 provided on both sides of the counter electrode current collector 121. The plurality of first conductive members 331a are provided in a stripe pattern in plan view of the side surface 11.

The first conductive member 331a has different properties from the second conductive member 331b. For example, the first conductive member 331a and the second conductive member 331b are formed using different materials. Specifically, the first conductive member 331a is formed using a material selected with focus on high conductivity and alloying with the counter electrode current collector 121. The second conductive member 331b, on the other hand, is formed using a material selected with focus on flexibility, impact resistance, chemical stability, cost, and ease of spreading in application.

The electrode connector 332 includes a plurality of first conductive members 332a and a second conductive member 332b. The second conductive member 332b is the same as the electrode connector 32 according to Embodiment 1, except that it covers the plurality of first conductive members 332a. In this embodiment, the second conductive member 332b conducts parallel connection of the plurality of battery cells 100 in each parallel laminate 50.

The plurality of first conductive members 332a contact each of the plurality of electrode layers 110 on the side surface 12. Specifically, the first conductive member 332a is provided for each electrode current collector 111, and is in contact with the end face of the electrode current collector 111 and the end faces of the electrode active material layers 112 provided on both sides of the electrode current collector 111. The plurality of first conductive members 332a are provided in a stripe pattern in plan view of the side surface 12.

The first conductive member 332a has different properties from the second conductive member 332b. For example, the first conductive member 332a and the second conductive member 332b are formed using different materials. Specifically, the first conductive member 332a is formed using a material selected with focus on high conductivity and alloying with the electrode current collector 111. The second conductive member 332b, on the other hand, is formed using a material selected with focus on flexibility, impact resistance, chemical stability, cost, and ease of spreading in application.

Focusing on a bipolar current collector 140, the first conductive member 331a is connected to the end face of the bipolar current collector 140 on the side surface 11 side, and the first conductive member 332a is connected to the end face thereof on the side surface 12 side. That is, the bipolar current collector 140 has its both end faces used for parallel connection, and thus the conductive members are provided on both end faces.

As described above, appropriate materials can be used for the connectors for parallel connection in each parallel laminate 50 of the battery 301. This can improve the performance of the battery 301 and also facilitate the manufacture of the battery 301.

Although Fig. 6 illustrates the example where the first conductive members 331a are connected to all the counter electrode current collectors 121, there may be some counter electrode current collectors 121 to which the first conductive members 331a are not connected. The same applies to the electrode current collector 111. One of the first conductive members 331a and 332a does not need to be provided.

### (Embodiment 4)

Next, a battery according to Embodiment 4 will be described.

In the battery according to Embodiment 4, as in the battery according to Embodiment 3, the counter electrode connector and the electrode connector are formed using a plurality of different materials. The battery according to Embodiment 4 is different from Embodiment 3 in the arrangement of materials forming each connector. Hereinafter, differences from Embodiment 3 will be mainly described and description of similarities will be omitted or simplified.

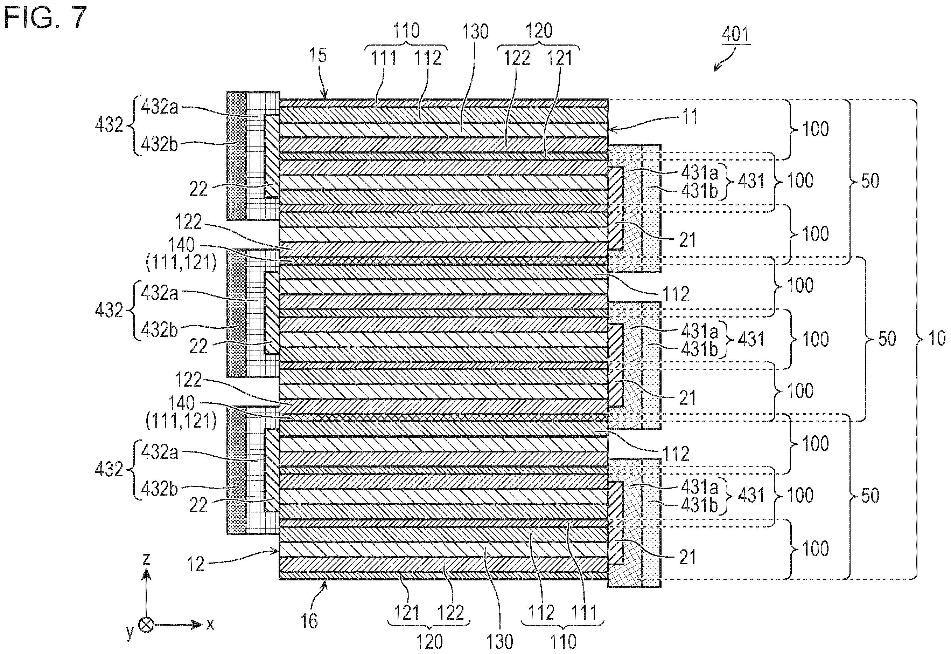

Fig. 7 is a sectional view of a battery 401 according to this embodiment. As illustrated in Fig. 7, the battery 401 includes a counter electrode connector 431 and an electrode connector 432, instead of the counter electrode connector 331 and the electrode connector 332 in the battery 301 according to Embodiment 3.

The counter electrode connector 431 includes a first conductive member 431a and a second conductive member 431b. Specifically, the counter electrode connector 431 has a two-layer structure including the first conductive member 431a and the second conductive member 431b. The first conductive member 431a is the same as the counter electrode connector 31 according to Embodiment 1. The second conductive member 431b covers the surface of the first conductive member 431a. The second conductive member 431b is not in direct contact with the counter electrode layer 120.

The first conductive member 431a has different properties from the second conductive member 431b. For example, the first conductive member 431a and the second conductive member 431b are formed using different materials. Specifically, the first conductive member 431a is formed using a material selected with focus on high conductivity and alloying with the counter electrode current collector 121. The second conductive member 431b, on the other hand, is formed using a material selected with focus on flexibility, impact resistance, chemical stability, cost, and ease of spreading in application.

The electrode connector 432 includes a first conductive member 432a and a second conductive member 432b. Specifically, the electrode connector 432 has a two-layer structure including the first conductive member 432a and the second conductive member 432b. The first conductive member 432a is the same as the electrode connector 32 according to Embodiment 1. The second conductive member 432b covers the surface of the first conductive member 432a. The second conductive member 432b is not in direct contact with the electrode layer 110.

The first conductive member 432a has different properties from the second conductive member 432b. For example, the first conductive member 432a and the second conductive member 432b are formed using different materials. Specifically, the first conductive member 432a is formed using a material selected with focus on high conductivity and alloying with the electrode current collector 111. The second conductive member 432b, on the other hand, is formed using a material selected with focus on flexibility, impact resistance, chemical stability, cost, and ease of spreading in application.

As described above, appropriate materials can be used for the connectors for parallel connection in each parallel laminate 50 of the battery 401. This can improve the performance of the battery 401 and also facilitate the manufacture of the battery 401.

The counter electrode connector 431 and the electrode connector 432 may have a laminate structure of more than or equal to three layers. Not all the counter electrode connectors 431 need to have the laminate structure including a plurality of layers. As in Embodiment 1, the counter electrode connector 31 including one layer may be provided. The same applies to the electrode connector 432.

### (Embodiment 5)

Next, a battery according to Embodiment 5 will be described.

The battery according to Embodiment 5 differs from the battery according to Embodiment 1 in that the current collector protrudes from the side surface of the power-generating element. Hereinafter, differences from Embodiment 1 will be mainly described and description of similarities will be omitted or simplified.

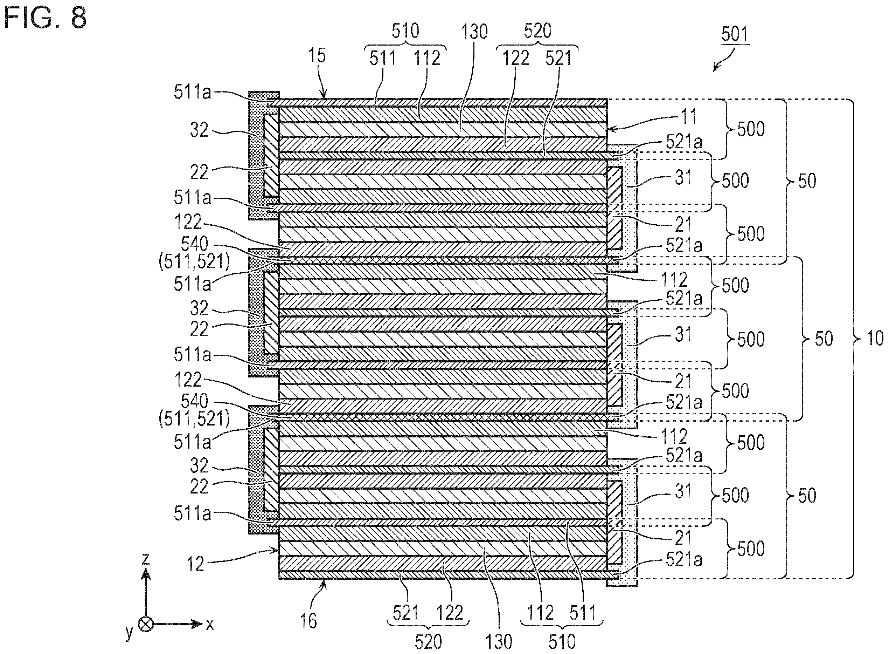

Fig. 8 is a sectional view of a battery 501 according to this embodiment. As illustrated in Fig. 8, a power-generating element 10 of the battery 501 includes battery cells 500, instead of the battery cells 100 in the battery 1 illustrated in Fig. 1.

The plurality of battery cells 500 each include an electrode layer 510, a counter electrode layer 520, and a solid electrolyte layer 130. The electrode layer 510 includes an electrode current collector 511 and an electrode active material layer 112. The counter electrode layer 520 includes a counter electrode current collector 521 and a counter electrode active material layer 122.

On the side surface 11, as illustrated in Fig. 8, the counter electrode current collector 521 protrudes with respect to the counter electrode active material layer 122, the solid electrolyte layer 130, the electrode active material layer 112, and the electrode current collector 511. In this embodiment, on the side surface 11, the counter electrode active material layer 122, the solid electrolyte layer 130, the electrode active material layer 112, and the electrode current collector 511 have their end faces flush with each other, forming a flat surface. A bipolar current collector 540 protrudes with respect to both the counter electrode active material layer 122 and the electrode active material layer 112.

The protruding counter electrode current collector 521 causes the counter electrode connector 31 to come into contact with the major surface of a protrusion 521a of the counter electrode current collector 521. The protrusion 521a is a part of the counter electrode current collector 521, and is located on the positive side of the x-axis with respect to the end face of the counter electrode active material layer 122 on the positive side of the x-axis. This can increase the contact area between the counter electrode connector 31 and the counter electrode current collector 521, thus reducing connection resistance thereof.

The protrusion amount of the counter electrode current collector 521, that is, the length of the protrusion 521a in the x-axis direction is not particularly limited. For example, the protrusion amount of the counter electrode current collector 521 is more than or equal to 4.5 times the thickness (that is, the length in the z-axis direction) of the counter electrode current collector 521. Accordingly, in this embodiment, since the counter electrode connector 31 is in contact with both major surfaces of the protrusion 521a, the contact area can be increased more than or equal to ten times the contact area when the counter electrode current collector 521 does not protrude.

Alternatively, the protrusion amount of the counter electrode current collector 521 may be more than or equal to nine times the thickness of the counter electrode current collector 521. This can increase the contact area more than or equal to ten times the contact area when the counter electrode current collector 521 does not protrude, even in the case where the counter electrode connector 31 contacts only one side of the major surface of the protrusion 521a.

In this embodiment, the electrode current collector 511 also has the same configuration on the side surface 12. That is, on the side surface 12, the electrode current collector 511 protrudes with respect to the electrode active material layer 112, the solid electrolyte layer 130, the counter electrode active material layer 122, and the counter electrode current collector 521. In this embodiment, on the side surface 12, the electrode active material layer 112, the solid electrolyte layer 130, the counter electrode active material layer 122, and the counter electrode current collector 521 have their end faces flush with each other, forming a flat surface. The bipolar current collector 540 protrudes with respect to both the electrode active material layer 112 and the counter electrode active material layer 122. That is, the bipolar current collector 540 protrudes on both of the side surfaces 11 and 12.

The protruding electrode current collector 511 causes the electrode connector 32 to come into contact with the major surface of a protrusion 511a of the electrode current collector 511. The protrusion 511a is a part of the electrode current collector 511, and is located on the negative side of the x-axis with respect to the end face of the electrode active material layer 112 on the negative side of the x-axis. This can increase the contact area between the electrode connector 32 and the electrode current collector 511, thus reducing connection resistance thereof.

The protrusion amount of the electrode current collector 511, that is, the length of the protrusion 511a in the x-axis direction is not particularly limited. For example, as with the counter electrode current collector 521, the protrusion amount of the electrode current collector 511 may be more than or equal to 4.5 times, or more than or equal to 9 times the thickness of the electrode current collector 511.

The protrusions 511a and 521a are each formed by not disposing the counter electrode active material layer 122 or the electrode active material layer 112 at the end of the current collector. Alternatively, the protrusions 511a and 521a are each formed by forming the counter electrode active material layer 122 or the electrode active material layer 112 on the entire surface of the current collector and then removing the ends thereof. This removal is performed, for example, by cutting to size, polishing, sandblasting, brushing, etching, or plasma irradiation, leaving only the current collector. The counter electrode active material layer 122 or the electrode active material layer 112 may be partially left behind without being removed.

As described above, the battery 501 according to the present embodiment has increased contact area between the current collector and the connector, and thus has the connection resistance thereof reduced. This can improve large current characteristics of the battery 501, making rapid charging possible, for example.

In this embodiment, the example where both the counter electrode current collector 521 and the electrode current collector 511 protrude has been described, but only one of them may protrude.

### (Embodiment 6)

Next, a battery according to Embodiment 6 will be described.

The battery according to Embodiment 6 is different from the battery according to Embodiment 1 in that, on the side surface of the power-generating element, the active material layer and the like that are not covered with the insulating layer are retreated from the current collector. Hereinafter, differences from Embodiment 1 will be mainly described and description of similarities will be omitted or simplified.

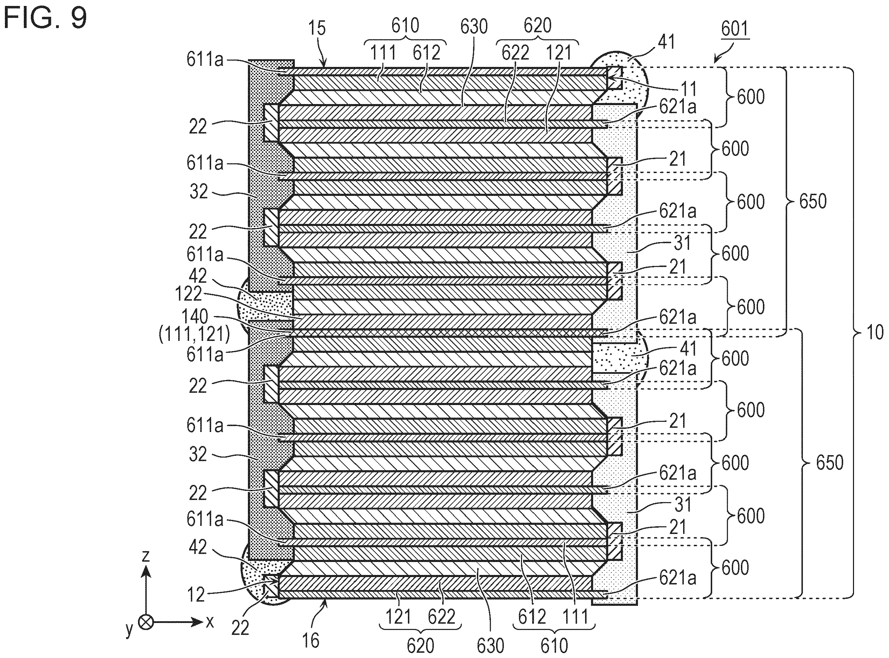

Fig. 9 is a sectional view of a battery 601 according to this embodiment. As illustrated in Fig. 9, a power-generating element 10 of the battery 601 includes ten battery cells 600, compared to the battery 1 illustrated in Fig. 1. Parallel laminates 650 are laminated, each including five battery cells 600 connected in parallel. Since there are two parallel laminates 650, only one bipolar current collector 140 is provided.

The plurality of battery cells 600 each include an electrode layer 610, a counter electrode layer 620, and a solid electrolyte layer 630. The electrode layer 610 includes an electrode current collector 111 and an electrode active material layer 612. The counter electrode layer 620 includes a counter electrode current collector 121 and a counter electrode active material layer 622.

As illustrated in Fig. 9, on the side surface 11, the counter electrode active material layer 622 is retreated with respect to both the electrode layer 610 and the counter electrode current collector 121. On the side surface 11, the solid electrolyte layer 630 is at least partially retreated with respect to both the electrode layer 610 and the counter electrode current collector 121. Specifically, a portion of the end face of the solid electrolyte layer 630, which is not covered with the electrode insulating layer 21, is inclined obliquely with respect to the z-axis direction.

The retreated counter electrode active material layer 622 causes the counter electrode current collector 121 to relatively protrude. The protruding counter electrode current collector 121 causes the counter electrode connector 31 to come into contact with the major surface of a protrusion 621a of the counter electrode current collector 121. This can increase the contact area between the counter electrode connector 31 and the counter electrode current collector 121, thus reducing connection resistance thereof.

The retreated amount of the counter electrode active material layer 622, that is, the protrusion amount of the counter electrode current collector 121 is not particularly limited. For example, as in Embodiment 5, the retreated amount of the counter electrode active material layer 622 may be more than or equal to 4.5 times, or more than or equal to nine times the thickness of the counter electrode current collector 121.

In this embodiment, the electrode active material layer 612 also has the same configuration on the side surface 12. That is, on the side surface 12, the electrode active material layer 612 is retreated with respect to both the counter electrode layer 620 and the electrode current collector 111. On the side surface 12, the solid electrolyte layer 630 is at least partially retreated with respect to both the counter electrode layer 620 and the electrode current collector 111. Specifically, a portion of the end face of the solid electrolyte layer 630, which is not covered with the counter electrode insulating layer 22, is inclined obliquely with respect to the z-axis direction.

The retreated electrode active material layer 612 causes the electrode current collector 111 to relatively protrude. The protruding electrode current collector 111 causes the electrode connector 32 to come into contact with the major surface of a protrusion 611a of the electrode current collector 111. This can increase the contact area between the electrode connector 32 and the electrode current collector 111, thus reducing connection resistance thereof.

The retreated amount of the electrode active material layer 612, that is, the protrusion amount of the electrode current collector 111, is not particularly limited. For example, as in Embodiment 5, the retreated amount of the electrode active material layer 612 may be more than or equal to 4.5 times, or more than or equal to nine times the thickness of the electrode current collector 111.

The active material layer is retreated by the same method as the method of protruding the current collector in Embodiment 5. For example, the active material layer is retreated by cutting to size, polishing, sandblasting, brushing, etching, or plasma irradiation, leaving only the current collector.

In this embodiment, on the side surface 11, the counter electrode current collector 121, the electrode current collector 111, and the electrode active material layer 612 are aligned when viewed from the z-axis direction. That is, the end faces of the counter electrode current collector 121, the electrode current collector 111, and the electrode active material layer 612 on the side surface 11 side form one plane parallel to the yz-plane. Similarly, on the side surface 12, the electrode current collector 111, the counter electrode current collector 121, and the counter electrode active material layer 622 are aligned when viewed from the z-axis direction. That is, the end faces of the electrode current collector 111, the counter electrode current collector 121, and the counter electrode active material layer 622 on the side surface 12 side form one plane parallel to the yz-plane. More specifically, in plan view, the electrode current collector 111 and the counter electrode current collector 121 have the same size and shape, and their outlines match.

Although will be described in detail later in the description of a manufacturing method, the electrode current collector 111 and the counter electrode current collector 121 have their outlines match by forming a laminate in which the plurality of battery cells 100 are laminated, and then performing batch cutting of the laminate. The battery 601 according to this embodiment is manufactured by retreating the end face of the active material layer. Simultaneous processing such as batch cutting can be performed on each battery cell 600, thus making it possible to suppress variations in characteristics of each battery cell 600.

As described above, the battery 601 according to this embodiment has increased contact area between the current collector and the connector, and thus has the connection resistance thereof reduced. This can improve large current characteristics of the battery 601, making rapid charging possible, for example.

In this embodiment, the example where both the counter electrode active material layer 622 and the electrode active material layer 612 are retreated has been described, but only one of them may be retreated. The solid electrolyte layer 630 does not need to be retreated on at least one of the side surfaces 11 and 12.

In this embodiment, the example where the end face covering member 41 is provided on the side surface 11 of the power-generating element 10, and the end face covering member 42 is provided on the side surface 12 has been described, but the present disclosure is not limited to this example. At least one of the end face covering members 41 and 42 does not need to be provided. The end face covering member 41 wraps around and covers the end of the major surface 15, but does not need to cover the major surface 15. The same applies to the relationship between the end face covering member 42 and the major surface 16.

### (Embodiment 7)

Next, a battery according to Embodiment 7 will be described.

The battery according to Embodiment 7 is different from the battery according to Embodiment 1 in that extraction terminals are provided on the upper and lower surfaces of the power-generating element. Hereinafter, differences from Embodiment 1 will be mainly described and description of similarities will be omitted or simplified.

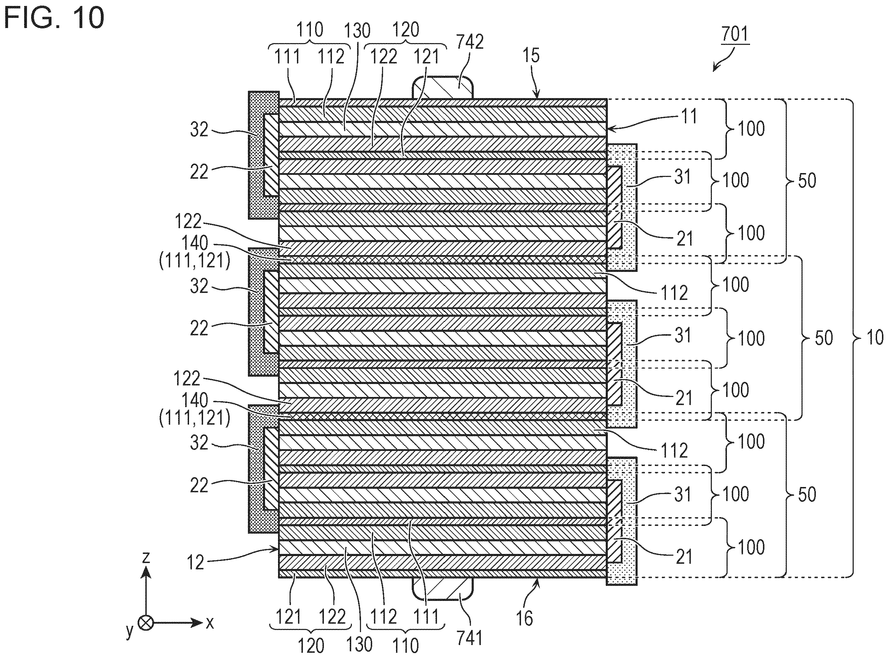

Fig. 10 is a sectional view of a battery 701 according to this embodiment. As illustrated in Fig. 10, the battery 701 includes a counter electrode extraction terminal 741 and an electrode extraction terminal 742, compared to the battery 1 according to Embodiment 1.

The counter electrode extraction terminal 741 is a conductive terminal provided on the major surface 16 of the power-generating element 10. The counter electrode extraction terminal 741 is one of external connection terminals of the battery 701, and is a positive electrode extraction terminal in this embodiment. The counter electrode extraction terminal 741 is in contact with and electrically connected to the lowermost counter electrode current collector 121 in the power-generating element 10.

The electrode extraction terminal 742 is a conductive terminal provided on the major surface 15 of the power-generating element 10. The electrode extraction terminal 742 is one of the external connection terminals of the battery 701, and is a negative electrode extraction terminal in this embodiment. The electrode extraction terminal 742 is in contact with and electrically connected to the uppermost electrode current collector 111 in the power-generating element 10.

The shape and size of each of the counter electrode extraction terminal 741 and the electrode extraction terminal 742 are not particularly limited. For example, as illustrated in Fig. 10, the counter electrode extraction terminal 741 is disposed only at the center of the major surface 16, but may be disposed at the end of the major surface 16. The counter electrode extraction terminal 741 may also be disposed so as to cover the entire major surface 16. The same applies to the electrode extraction terminal 742.

The counter electrode extraction terminal 741 and the electrode extraction terminal 742 are each formed using a conductive material. For example, the counter electrode extraction terminal 741 and the electrode extraction terminal 742 are metal foils or metal plates made of metal such as copper, aluminum, and stainless steel. Alternatively, the counter electrode extraction terminal 741 and the electrode extraction terminal 742 may be made of cured solder.

The counter electrode extraction terminal 741 may have higher conductivity than the counter electrode current collector 121. The electrode extraction terminal 742 may have higher conductivity than the electrode current collector 111. This makes it possible to realize low resistance connection between the battery 701 and external members.

In this embodiment, the counter electrode extraction terminal 741 and the electrode extraction terminal 742 are provided on the different major surfaces 15 and 16 of the power-generating element 10, respectively. Since the two terminals with different polarities are disposed apart, the occurrence of short-circuiting can be suppressed. The shapes and sizes of the counter electrode extraction terminal 741 and the electrode extraction terminal 742 can also be adjusted as appropriate, and mounting performance and the degree of freedom in connection can be improved.

### (Embodiment 8)

Next, a battery according to Embodiment 8 will be described.

The battery according to Embodiment 8 is different from the battery according to Embodiment 7 in that extraction terminals for both a positive electrode and a negative electrode are provided on one major surface of a power-generating element. Hereinafter, differences from Embodiment 7 will be mainly described and description of similarities will be omitted or simplified.

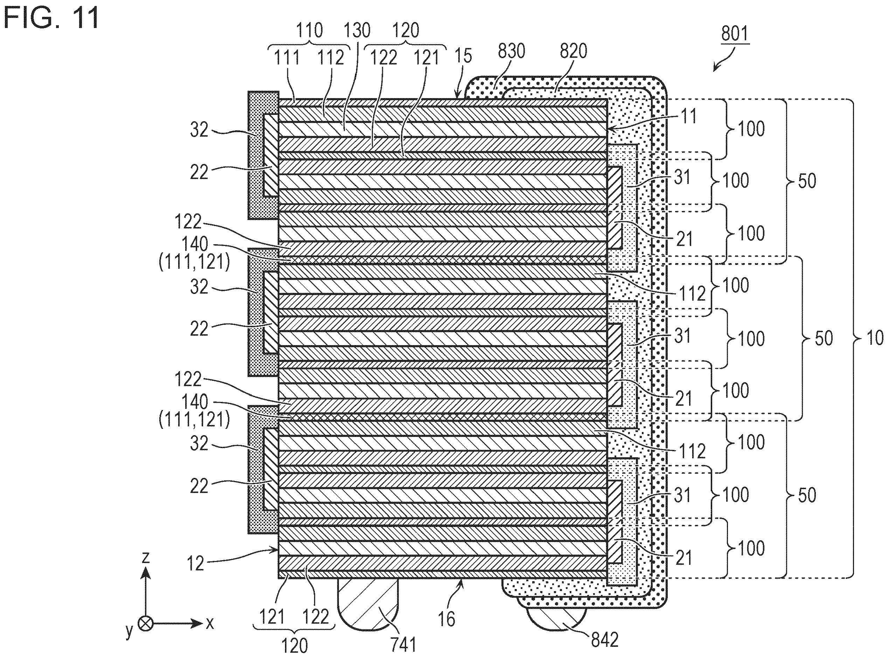

Fig. 11 is a sectional view of a battery 801 according to this embodiment. As illustrated in Fig. 11, the battery 801 is different from the battery 701 illustrated in Fig. 10 in including an electrode extraction terminal 842, instead of the electrode extraction terminal 742. The battery 801 also includes a side insulating layer 820 and a side conductive part 830.

The side insulating layer 820 covers the side surface 11 of the power-generating element 10 from the lower end to upper end of the power-generating element 10. For example, the side insulating layer 820 covers the entire surface of the side surface 11. The side insulating layer 820 can thus ensure insulation between the side conductive part 830 and the plurality of battery cells 100 and the plurality of counter electrode connectors 31.

The side insulating layer 820 also partially covers the major surfaces 15 and 16. The side insulating layer 820 partially provided on the major surface 16 can ensure the insulation between the lowermost counter electrode current collector 121 and the side conductive part 830 and the electrode extraction terminal 842. The side insulating layer 820 does not need to cover the major surface 15.

The side insulating layer 820 is formed using an electrically insulating material. For example, the side insulating layer 820 contains resin. The resin is, for example, an epoxy resin, but is not limited thereto. An inorganic material may be used as the insulating material. The insulating material that can be used is selected based on various properties such as flexibility, gas barrier properties, impact resistance, and heat resistance.

The side conductive part 830 is disposed along the side insulating layer 820. The side conductive part 830 is connected to the uppermost electrode current collector 111. Specifically, the side conductive part 830 covers the major surface 15 of the power-generating element 10 and is connected to the counter electrode current collector 121 positioned in the uppermost layer of the power-generating element 10. The side conductive part 830 is connected to the electrode extraction terminal 842 disposed on the major surface 16 of the power-generating element 10.

The side conductive part 830 is not in contact with the plurality of battery cells 100 and the plurality of counter electrode connectors 31 on the side surface 11 of the power-generating element 10. This can suppress short-circuiting of the power-generating element 10.

The side conductive part 830 is formed using a conductive resin material or the like. Alternatively, the side conductive part 830 may be formed using a metal material such as solder. The conductive material that can be used is selected based on various properties such as flexibility, gas barrier properties, impact resistance, heat resistance, and solder wettability.

The electrode extraction terminal 842 is provided on the major surface 16. That is, the counter electrode extraction terminal 741 and the electrode extraction terminal 842 are provided on the same major surface 16. The electrode extraction terminal 842 is electrically connected to the uppermost layer electrode current collector 111 through the side conductive part 830.

Since the counter electrode extraction terminal 741 and the electrode extraction terminal 842 are thus provided on the same major surface 16, mounting of the battery 801 is facilitated. For example, the major surface 16 of the power-generating element 10 is larger in area than the side surface 11 of the power-generating element 10. Since the extraction terminal is provided on the large-area surface, the battery 801 can be mounted over a large area, and the reliability of the connection can be improved. For example, the shape and arrangement of the extraction terminals can be adjusted depending on the wiring layout of the mounting board. This can also increase the degree of freedom in connection.

Since both the positive and negative terminals are provided on the same major surface, compact mounting of the battery 801 can be realized. For example, a connection terminal pattern (also referred to as footprint) formed on the mounting board can be reduced in size. Since mounting is possible with the major surface 16 of the power-generating element 10 and the mounting board disposed in parallel, it is possible to realize low-profile mounting on the mounting board.

The height of the counter electrode extraction terminal 741 from the major surface 16 and the height of the electrode extraction terminal 842 from the major surface 16 may be the same. By aligning the heights of the terminals, mounting performance can be improved.

### (Embodiment 9)

Next, a battery according to Embodiment 9 will be described.

The battery according to Embodiment 9 differs from the battery according to Embodiment 7 in including a sealing member. Hereinafter, differences from Embodiment 7 will be mainly described and description of similarities will be omitted or simplified.

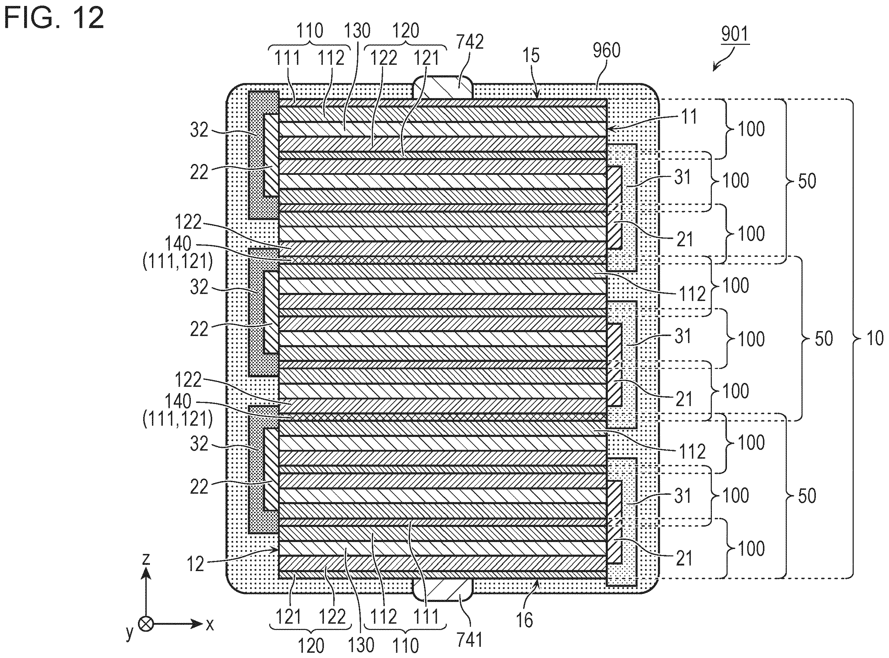

Fig. 12 is a sectional view of a battery 901 according to this embodiment. As illustrated in Fig. 12, the battery 901 is different from the battery 701 illustrated in Fig. 10 in including a sealing member 960.

The sealing member 960 at least partially exposes each of the counter electrode extraction terminal 741 and the electrode extraction terminal 742, and seals the power-generating element 10. The sealing member 960 is provided, for example, so as not to expose the power-generating element 10, the electrode insulating layer 21, the counter electrode insulating layer 22, the counter electrode connector 31, and the electrode connector 32.

The sealing member 960 is formed using, for example, an electrically insulating material. As the insulating material, a material for a generally known battery sealing member such as a sealant can be used, for example. For example, a resin material can be used as the insulating material. The insulating material may be a material that has insulation properties but no ion conductivity. For example, the insulating material may be at least one of epoxy resin, acrylic resin, polyimide resin, and silsesquioxane.

The sealing member 960 may contain a plurality of different insulating materials. For example, the sealing member 960 may have a multilayer structure. Each layer of the multilayer structure may be formed using different materials and have different properties.

The sealing member 960 may contain particulate metal oxide material. As the metal oxide material, silicon oxide, aluminum oxide, titanium oxide, zinc oxide, cerium oxide, iron oxide, tungsten oxide, zirconium oxide, calcium oxide, zeolite, glass, or the like can be used. For example, the sealing member 960 may be formed using a resin material in which a plurality of particles made of a metal oxide material are dispersed.

The particle size of the metal oxide material may be less than or equal to the distance between the electrode current collector 111 and the counter electrode current collector 121. The particle shape of the metal oxide material is, for example, spherical, ellipsoidal, rod-shaped or the like, but is not limited thereto.

The sealing member 960 thus provided can improve the reliability of the battery 901 in various aspects such as mechanical strength, short-circuiting prevention, and moisture proofing.

The battery 801 according to Embodiment 8 may include the sealing member 960. Alternatively, the batteries 1, 201, 301, 401, 501, 601 or 701, in which the counter electrode extraction terminal 741 and the electrode extraction terminal 742 are not provided, may include the sealing member 960. In this case, the sealing member 960 may be provided so as to at least partially expose each of the uppermost electrode current collector 111 or the electrode connector 32 connected to this uppermost electrode current collector 111 and the lowermost counter electrode current collector 121 or the counter electrode connector 31 connected to this lowermost counter electrode current collector 121.

### (Manufacturing Method)

Next, a method for manufacturing the battery according to each of the above embodiments will be described.

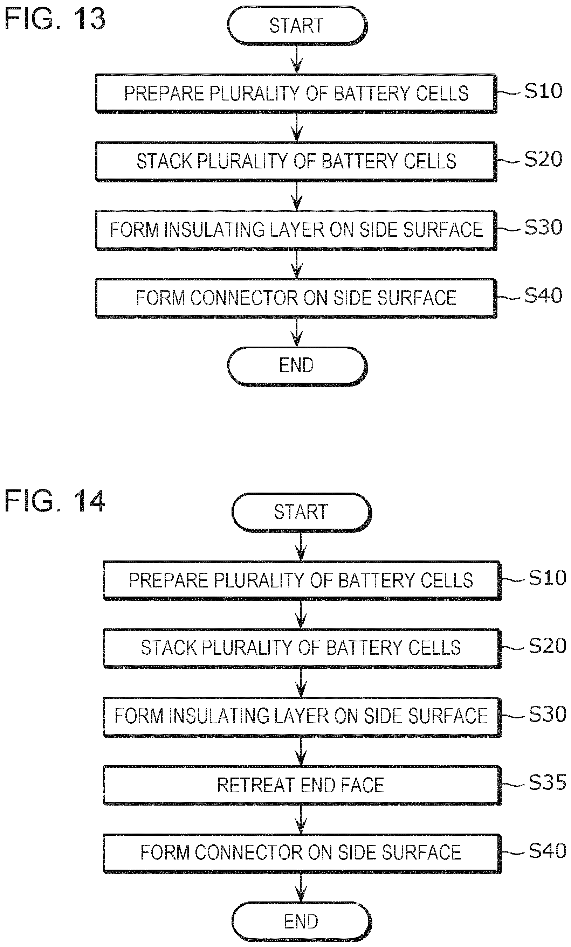

Fig. 13 is a flowchart illustrating an example of a method for manufacturing a battery according to each embodiment. An example of the battery 1 according to Embodiment 1 will be described below.

As illustrated in Fig. 13, a plurality of battery cells are first prepared (S10). The battery cells to be prepared are, for example, the battery cells 100A, 100B, and 100C illustrated in Figs. 3A to 3C.

Next, the plurality of battery cells 100 are laminated (S20). Specifically, a laminate structure is formed in which a plurality of parallel laminates are laminated, each having an odd number of battery cells 100 laminated in order such that the arrangement order of the electrode layer 110, the counter electrode layer 120, and the solid electrolyte layer 130 is alternated. In this embodiment, the power-generating element 10 illustrated in Fig. 4, for example, is formed by appropriately combining and laminating the battery cells 100A, 100B, and 100C. The power-generating element 10 is an example of the laminate structure. The power-generating element 10 may be formed by forming a plurality of parallel laminates and then further laminating the plurality of parallel laminates. Alternatively, the power-generating element 10 may be formed by laminating the battery cells 100A, 100B, and 100C in an appropriate order and direction. That is, the plurality of parallel laminates may be formed in order according to the laminating of the battery cells. The power-generating element 10 may be formed simultaneously with the formation of the last parallel laminate.

After laminating the plurality of battery cells 100, the side surface of the power-generating element 10 may be flattened. For example, by batch cutting of the laminate of the plurality of battery cells 100, the power-generating element 10 having flat side surfaces can be formed. This cutting process is performed using a blade, laser, jet or the like, for example. The cutting process may be performed for each parallel laminate.

Next, insulating layers are formed on the side surfaces of the power-generating element 10 (S30). Specifically, an electrode insulating layer 21 covering an electrode layer 110 is formed on a first side surface of each of the plurality of parallel laminates. A counter electrode insulating layer 22 covering a counter electrode layer 120 is also formed on a second side surface of each of the plurality of parallel laminates.

The electrode insulating layer 21 and the counter electrode insulating layer 22 are formed by coating and curing a fluid resin material, for example. Coating is performed using an inkjet method, a spray method, a screen printing method, a gravure printing method or the like. Curing is performed by drying, heating, light irradiation or the like, depending on the resin material used.

When forming the electrode insulating layer 21 and the counter electrode insulating layer 22, a protective member may also be formed by masking with a tape or resist treatment in regions where no insulating layer should be formed, to suppress insulation of the end face of the counter electrode current collector 121 and the end face of the electrode current collector 111. The conductivity of each current collector can be ensured by removing the protective member after the formation of the electrode insulating layer 21 and the counter electrode insulating layer 22.

Next, a connector is formed on the side surface of the power-generating element 10 (S40). Specifically, in each of the plurality of parallel laminates, a counter electrode connector 31 electrically connected to the plurality of counter electrode layers 120 is formed so as to cover the first side surface and the electrode insulating layer 21 . In each of the plurality of parallel laminates, an electrode connector 32 that electrically connects the plurality of electrode layers 110 is formed so as to cover the second side surface and the counter electrode insulating layer 22.

For example, the counter electrode connector 31 is formed by applying and curing a conductive paste such as a conductive resin so as to cover the electrode insulating layer 21 and the portion of the parallel laminate not covered with the electrode insulating layer 21 on the first side surface. The electrode connector 32 is also formed by applying and curing the conductive resin so as to cover the counter electrode insulating layer 22 and the portion of the parallel laminate not covered with the counter electrode insulating layer 22 on the second side surface. The counter electrode connector 31 and the electrode connector 32 may be formed by printing, plating, vapor deposition, sputtering, welding, soldering, joining or other methods, for example.

Through the above steps, the battery 1 illustrated in Fig. 1 can be manufactured.

The method for manufacturing a battery is not limited to the example illustrated in Fig. 13. For example, the method may include a step of pressing the plurality of battery cells 100 prepared in step S10 individually or after laminating the plurality of battery cells, in the laminating direction.

After the formation of the laminate structure (S20) and before the formation of the connectors (S40), the first conductive members 331a and 332a illustrated in Fig. 6 may be formed. The first conductive members 331a and 332a may be formed by printing, plating, vapor deposition, sputtering, welding, soldering, joining, or other methods, for example.

For example, in the formation of the connectors (S40), different types of conductive materials may be laminated to form a counter electrode connector 431 and an electrode connector 432, each including a plurality of layers, as illustrated in Fig. 7.

As illustrated in Fig. 14, a step of retreating the end faces (S35) may be performed after the formation of the laminate structure (S20) or after the formation of the insulating layers (S30). Fig. 14 is a flowchart illustrating another example of a method for manufacturing a battery according to each embodiment.

Specifically, the end face of the active material layer in the power-generating element 10 is retreated, thus causing the current collector to protrude with respect to the active material layer. More specifically, on the side surface 11 of the power-generating element 10, the counter electrode current collector 121, which is a part of the counter electrode layer 120, is made to protrude with respect to the counter electrode active material layer 122, which is another part of the counter electrode layer 120.

In the step of retreating end faces, the side surface 11 is subjected to, for example, laser irradiation, cutting to size, polishing, sandblasting, brushing, etching, or plasma irradiation. In this case, the electrode insulating layer 21 functions as a protective member for each process. For example, when sandblasting is performed on the side surface 11, the portion covered with the electrode insulating layer 21 is not polished, and the portion not covered with the electrode insulating layer 21, specifically, the end face of the counter electrode layer 120 or the like is scraped and retreated. The counter electrode active material layer 122 is more brittle than the counter electrode current collector 121 and is thus removed more than the counter electrode current collector 121. The counter electrode active material layer 122 is thus retreated with respect to the counter electrode current collector 121. That is, as illustrated in Fig. 9, a counter electrode active material layer 622 whose end face is retreated is formed. In other words, the counter electrode current collector 121 protrudes with respect to the counter electrode active material layer 622.

The same process is performed on the side surface 12, and thus the electrode active material layer 112 is retreated with respect to the electrode current collector 111. That is, as illustrated in Fig. 9, an electrode active material layer 612 whose end face is retreated is formed. In other words, the electrode current collector 111 protrudes with respect to the electrode active material layer 612.

The step of protruding the end of the current collector, such as the step of retreating the end faces, may be performed before laminating the battery cells 100. For example, the step of protruding the current collector may be performed during the preparation of the battery cells 100. That is, the power-generating element 10 illustrated in Fig. 8 or 9 may be formed by laminating battery cells 500 or 600 with protruding current collectors.

For example, a extraction terminal may be formed on one or both of the major surfaces 15 and 16 of the power-generating element 10. For example, the battery 701 can be manufactured by forming the electrode extraction terminal 742 on the major surface 15 and the counter electrode extraction terminal 741 on the major surface 16. The counter electrode extraction terminal 741 and the electrode extraction terminal 742 are formed by applying a conductive material such as a metal material in a desired region by plating, printing, soldering or the like. Alternatively, the counter electrode extraction terminal 741 and the electrode extraction terminal 742 may be formed by welding or joining metal plates or the like.

Instead of forming the electrode extraction terminal 742 on the major surface 15, the electrode extraction terminal 842 may be formed on the major surface 16 after forming the side insulating layer 820 and the side conductive part 830. The side insulating layer 820 is formed in the same manner as the electrode insulating layer 21 and the counter electrode insulating layer 22, for example, by coating and curing a fluid resin material. The side conductive part 830 is formed in the same manner as the counter electrode connector 31 and the electrode connector 32, by coating and curing a conductive paste such as a conductive resin. Alternatively, the side conductive part 830 may be formed by welding or joining metal plates or the like.

After forming the extraction terminals, the sealing member 960 illustrated in Fig. 12 may be formed. The sealing member 960 is formed by coating and curing a fluid resin material, for example. Coating is performed by an inkjet method, a spray method, a screen printing method, a gravure printing method or the like. Curing is performed by drying, heating, light irradiation or the like, depending on the resin material used. When no extraction terminals are formed, the sealing member 960 may be formed after the formation of the connectors (S40).

### (Other Embodiments)

The battery and the method for manufacturing a battery according to one or more aspects have been described above based on the embodiments. However, the present disclosure is not limited only to these embodiments. The present disclosure also encompasses various modifications conceived by those skilled in the art to the embodiments and aspects constructed by a combination of the constituent elements in the different embodiments as long as such modifications and aspects do not depart from the scope of the present disclosure.

For example, the plurality of parallel laminates do not need to include the same number of battery cells 100 laminated therein.

For example, the first side surface and the second side surface of the parallel laminate may be side surfaces adjacent to each other. That is, the counter electrode connector 31 and the electrode connector 32 may be provided on two adjacent side surfaces of the power-generating element 10.

The first side surface and the second side surface may be the same side surface of the parallel laminate. That is, the counter electrode connector 31 and the electrode connector 32 may be provided separately in two different regions on one side surface of the power-generating element 10. The two different regions are, for example, regions on either side of a virtual line parallel to the z-axis when one side surface of the power-generating element 10 is divided in half by the virtual line in plan view of the one side surface.

The parallel laminate may have a plurality of first side surfaces and a plurality of second side surfaces. That is, the counter electrode connectors 31 may be provided on two adjacent or opposite side surfaces of the power-generating element 10. The same may apply to the electrode connector 32.

For example, the description is given of the example where the current collector is shared between adjacent battery cells, but the present disclosure is not limited to this example. The counter electrode current collector, the electrode current collector, and the bipolar current collector may each have a laminate structure of two current collectors.

The respective embodiments described above may be subjected to various modifications, substitution, addition, omission, and the like within the scope of claims or a range equivalent thereto.

### Industrial Applicability

The present disclosure can be adapted to a battery for electronic devices, electric appliances, electric vehicles, and the like, for example.

### Reference Signs List

1, 201, 301, 401, 501, 601, 701, 801, 901 battery
10 power-generating element
11, 12, 13, 14 side surface
15, 16 major surface
21 electrode insulating layer
22 counter electrode insulating layer
31, 331, 431 counter electrode connector
32, 332, 432 electrode connector
41, 42 end face covering member
50, 650 parallel laminate
100, 100A, 100B, 100C, 500, 600 battery cell
110, 110B, 510, 610 electrode layer
111, 511 electrode current collector
112 , 612 electrode active material layer
120, 120C, 520, 620 counter electrode layer
121, 521 counter electrode current collector
122, 622 counter electrode active material layer
130, 630 solid electrolyte layer
140, 540 bipolar current collector
331a, 332a, 431a, 432a first conductive member
331b, 332b, 431b, 432b second conductive member
511a, 521a, 611a, 621a protrusion
741 counter electrode extraction terminal
742, 842 electrode extraction terminal
820 side insulating layer
830 side conductive part
960 sealing member

## Claims

1. A battery comprising:
a power-generating element having a plurality of parallel laminates that are electrically series-connected and laminated, wherein
the plurality of parallel laminates each include an odd number of battery cells that are electrically connected in parallel and laminated, and
the odd number of battery cells each include an electrode layer, a counter electrode layer, and a solid electrolyte layer positioned between the electrode layer and the counter electrode layer,
the battery further comprising:
an electrode insulating member that covers the electrode layer on a first side surface of each of the plurality of parallel laminates;
a counter electrode connector that covers the first side surface and the electrode insulating member and is electrically connected to the counter electrode layer in each of the plurality of parallel laminates;
a counter electrode insulating member that covers the counter electrode layer on a second side surface of each of the plurality of parallel laminates; and
an electrode connector that covers the second side surface and the counter electrode insulating member and is electrically connected to the electrode layer in each of the plurality of parallel laminates.

2. The battery according to claim 1, wherein
no insulating layer is disposed between two of the plurality of parallel laminates, which are adjacent to each other in a laminating direction.

3. The battery according to claim 1 or 2, wherein
the electrode layer and the counter electrode layer each include a current collector, and
in two of the plurality of parallel laminates, which are adjacent to each other in a laminating direction, one of the electrode layer and the counter electrode layer in an uppermost layer of a lower parallel laminate shares a current collector with an other of the electrode layer and the counter electrode layer in a lowermost layer of an upper parallel laminate.

4. The battery according to any one of claims 1 to 3, wherein
the odd number of battery cells have a same size.

5. The battery according to any one of claims 1 to 4, wherein
the electrode layer and the counter electrode layer each include a current collector and an active material layer laminated on the current collector,
the current collector of the counter electrode layer has a counter electrode protrusion that protrudes with respect to the active material layer of the counter electrode layer on the first side surface,
the counter electrode connector is in contact with the counter electrode protrusion,
the current collector of the electrode layer has an electrode protrusion that protrudes with respect to the active material layer of the electrode layer on the second side surface, and
the electrode connector is in contact with the electrode protrusion.

6. The battery according to claim 5, wherein
the counter electrode protrusion protrudes with respect to the active material layer of the electrode layer on the first side surface, and
the electrode protrusion protrudes with respect to the active material layer of the counter electrode layer on the second side surface.

7. The battery according to claim 5, wherein
current collectors of the electrode layer and the counter electrode layer have their end faces aligned when viewed from a laminating direction, on each of the first side surface and the second side surface.

8. The battery according to any one of claims 1 to 7, further comprising:
a first covering member that covers the first side surface between two counter electrode connectors adjacent in the laminating direction, each of which being the counter electrode connector; and
a second covering member that covers the second side surface between two electrode connectors adjacent in the laminating direction, each of which being the electrode connector,
wherein the first covering member and the second covering member each have ion conductivity or insulation properties.

9. The battery according to any one of claims 1 to 8, further comprising:
an electrode extraction terminal provided on a first major surface of the power-generating element; and
a counter electrode extraction terminal provided on a second major surface opposite to the first major surface of the power-generating element.

10. The battery according to any one of claims 1 to 8, further comprising:
a counter electrode extraction terminal and an electrode extraction terminal provided on a first major surface of the power-generating element.

11. The battery according to claim 10, further comprising:
a side insulating layer that covers a side surface of the power-generating element from one end to an other end of the power-generating element in a laminating direction; and
a side conductive part disposed along the side insulating layer,
wherein the side conductive part electrically connects a second major surface of the power-generating element, which is opposite to the first major surface, to one of the counter electrode extraction terminal and the electrode extraction terminal.

12. The battery according to claim 11, wherein
the side insulating layer covers the first side surface and the counter electrode connector, or covers the second side surface and the electrode connector.

13. The battery according to any one of claims 9 to 12, further comprising:
a sealing member that at least partially exposes each of the counter electrode extraction terminal and the electrode extraction terminal and seals the power-generating element, the counter electrode connector, and the electrode connector.

14. The battery according to any one of claims 1 to 13, wherein
the electrode insulating member covers the electrode layer and a part of the counter electrode layer on the first side surface, and
the counter electrode insulating member covers the counter electrode layer and a part of the electrode layer on the second side surface.

15. The battery according to any one of claims 1 to 13, wherein
at least one of the counter electrode connector and the electrode connector includes
a plurality of first conductive members that contact each of a plurality of counter electrode layers, each of which being the counter electrode layer or each of a plurality of electrode layers, each of which being the electrode layer, and
a second conductive member that covers the plurality of first conductive members.

16. The battery according to any one of claims 1 to 14, wherein
at least one of the counter electrode connector and the electrode connector includes
a first conductive member that contacts a plurality of counter electrode layers, each of which being the counter electrode layer or a plurality of electrode layers, each of which being the electrode layer, and
a second conductive member that covers the first conductive member.

17. The battery according to any one of claims 1 to 16, wherein
at least one of the electrode insulating member and the counter electrode insulating member contains resin.

18. A method for manufacturing a battery, comprising the steps of:
preparing a plurality of battery cells, each including an electrode layer, a counter electrode layer, and a solid electrolyte layer positioned between the electrode layer and the counter electrode layer;
forming a laminate structure by laminating a plurality of battery cells, in which a plurality of parallel laminates are laminated, each having an odd number of battery cells laminated such that an arrangement order of the electrode layer, the counter electrode layer, and the solid electrolyte layer is alternated for every battery cell;
covering the electrode layer with an electrode insulating member on a first side surface of each of the plurality of parallel laminates, and covering the counter electrode layer with a counter electrode insulating member on a second side surface of each of the plurality of parallel laminates; and
covering the first side surface and the electrode insulating member with a counter electrode connector electrically connected to the counter electrode layer, and covering the second side surface and the counter electrode insulating member with an electrode connector electrically connected to the electrode layer, in each of the plurality of parallel laminates.

19. The method for manufacturing a battery, according to claim 18, wherein
the electrode layer and the counter electrode layer each include a current collector and an active material layer laminated on the current collector,
the method further comprising the step of:
protruding the current collector of the counter electrode layer with respect to the active material layer of the counter electrode layer on the first side surface, and protruding the current collector of the electrode layer with respect to the active material layer of the electrode layer on the second side surface.

20. The method for manufacturing a battery, according to claim 19, wherein
the step of protruding the current collector is performed by at least one of laser irradiation, cutting to size, polishing, sandblasting, brushing, etching, and plasma irradiation.
